(19) Europäisches Patentamt / European Patent Office / Office européen des brevets

(11) **EP 3 296 348 B1**

(12) **EUROPEAN PATENT SPECIFICATION**

(45) Date of publication and mention
of the grant of the patent:
**26.10.2022 Bulletin 2022/43**

(21) Application number: **16792728.4**

(22) Date of filing: **11.05.2016**

(51) International Patent Classification (IPC):
**B29D 7/01** (2006.01)  **B29C 55/12** (2006.01)
**B29C 55/14** (2006.01)  **B32B 15/085** (2006.01)
**B32B 27/32** (2006.01)  **C08J 5/18** (2006.01)
**C08J 7/00** (2006.01)  **H01G 4/18** (2006.01)
**B29K 23/00** (2006.01)

(52) Cooperative Patent Classification (CPC):
**B29C 55/12; B29D 7/01; B32B 15/085;
B32B 27/32; C08J 5/18; C08J 7/00; H01G 4/18;**
B29K 2023/10

(86) International application number:
**PCT/JP2016/064059**

(87) International publication number:
**WO 2016/182003 (17.11.2016 Gazette 2016/46)**

(54) **POLYPROPYLENE FILM, METAL MEMBRANE LAYERED FILM AND FILM CAPACITOR AS WELL AS METHOD FOR MANUFACTURING THE SAME**

POLYPROPYLENSCHICHT, MIT METALLMEMBRAN GESCHICHTETE FOLIE UND SCHICHTKONDENSATOR SOWIE VERFAHREN ZUR HERSTELLUNG DAVON

FILM DE POLYPROPYLÈNE, FILM STRATIFIÉ À MEMBRANE MÉTALLIQUE ET CONDENSATEUR À FILM AINSI QUE LEUR PROCÉDÉ DE FABRICATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **12.05.2015  JP 2015097148
12.05.2015  JP 2015097149
15.12.2015  JP 2015243795
17.03.2016  JP 2016053683**

(43) Date of publication of application:
**21.03.2018 Bulletin 2018/12**

(73) Proprietor: **Toray Industries, Inc.**
**Tokyo 103-8666 (JP)**

(72) Inventors:
• **IMANISHI, Yasuyuki**
**Shiga 520-8558 (JP)**
• **OHKURA, Masatoshi**
**Shiga 520-8558 (JP)**
• **OKADA, Kazuma**
**Shiga 520-8558 (JP)**
• **KUMA, Takuya**
**Shiga 520-8558 (JP)**

(74) Representative: **Mewburn Ellis LLP**
**Aurora Building**
**Counterslip**
**Bristol BS1 6BX (GB)**

(56) References cited:
**WO-A1-2015/012324    WO-A1-2016/043172
WO-A1-2016/043217    JP-A- H08 258 129
JP-A- S52 139 176    JP-A- 2004 323 542
JP-A- 2009 301 036**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

TECHNICAL FIELD

The present invention relates to a polypropylene film, a metal membrane layered film, and a film capacitor, and methods for manufacturing the same.

BACKGROUND ART

Since a polypropylene film has high transparency, and is excellent in mechanical characteristics and electric characteristics, it is used in various applications such as packaging applications, tape applications, and electric applications including cable lapping and capacitors.

Among these applications, a polypropylene film is particularly preferably used in a high-voltage capacitor regardless of whether it is for a DC application or an AC application because of its excellent withstand voltage and low loss characteristics.

Recently, inverters are introduced into various electric facilities, and it is increasingly required to downsize capacitors as well as increase the capacitance of capacitors. In view of such a requirement from the market, particularly in automobile applications (including hybrid car applications), solar power generation, and wind power generation, it is becoming essential to improve the breakdown voltage of a polypropylene film, and to further reduce the film thickness while maintaining the productivity and workability of the film.

Such a polypropylene film requires in-plane high ratio stretching from the viewpoint of improvement in breakdown voltage, productivity, workability, and heat resistance, and it is particularly important to increase the strength and crystal orientation degree of the film. From the viewpoint of heat resistance, in consideration of future power semiconductor applications in which SiC is used, it is said that the temperature of the use environment will increase. Improvement in breakdown voltage of a film in a high-temperature environment exceeding 110°C is demanded for further heat resistance and withstand voltage as a capacitor. As described in Non-Patent Document 1, however, the upper limit of the operating temperature of the polypropylene film is said to be about 110°C, and it is extremely difficult to stably maintain the breakdown voltage in such a temperature environment.

In the past, proposals have been made to improve the breakdown voltage by controlling the crystallite size and the plane orientation degree as a technique for obtaining a thin polypropylene film having good performance in a high-temperature environment (for example, Patent Document 1). In addition, proposals have been made to improve long-term heat resistance and breakdown voltage by controlling the crystallite size to a size not larger than a specific size and controlling the birefringence value in the thickness direction within a specific range (for example, Patent Document 2).

In addition, as a polypropylene film thought to be excellent in strength or heat resistance, Patent Document 3 discloses a polypropylene film having high tensile strength at break and the like. Patent Document 4 discloses a polypropylene film that is excellent in heat resistance and dimensional stability, high in stiffness, small in elongation under a load at a high temperature, and has low shrinkage rate at 150°C. Patent Document 5 discloses a propylene-based resin layered film having a specified tensile strength at break in the longitudinal direction as a propylene-based resin layered film having good film appearance and an excellent hand cut property. Patent Document 6 discloses a stretched polypropylene film that has a low shrinkage factor at 150°C and when the $\alpha$-crystal (110) surface scattering as measured by wide-angle x-ray scattering is plotted against azimuth angle, the half width of the largest peak is 30 degrees or less. Example films are 20$\mu$m thick.

PRIOR ART DOCUMENTS

PATENT DOCUMENTS

Patent Document 1: JP-A-2-129905;
Patent Document 2: JP-A-2014-231584;
Patent Document 3: JP-A-11-188790;
Patent Document 4: JP-A-2014-51657;
Patent Document 5: JP-A-9-262945; and
Patent Document 6: WO2015/012324A.

NON-PATENT DOCUMENT

Non-Patent Document 1: Motonobu Kawai, "Film Capacitor Leap Forward, From Car to Energy", Nikkei Electronics, Nikkei Business Publications, Inc., September 17, 2012, pp. 57-62

SUMMARY OF THE INVENTION

PROBLEMS TO BE SOLVED BY THE INVENTION

However, none of the polypropylene films described in Patent Documents 1 to 6 is sufficiently improved in the breakdown voltage in a high-temperature environment, and is also insufficient in the withstand voltage and reliability in a high-temperature environment when incorporated into a capacitor.

It is therefore an object of the present invention to provide a polypropylene film which exhibits a high breakdown voltage even in a high-temperature environment and which can exhibit withstand voltage and reliability even in a high-temperature environment when incorporated into a capacitor, a metal membrane layered film and a film capacitor including the polypropylene film, and methods for manufacturing the same.

SOLUTIONS TO THE PROBLEMS

The present inventors have made intensive studies in order to solve the above-mentioned problems, and considered as follows as to the reason why the breakdown voltage of polypropylene films described in Patent Documents 1 to 5 in a high-temperature environment, as well as the withstand voltage and reliability when the films are incorporated into a capacitor are insufficient.

That is, as for the polypropylene films described in. Patent Documents 1 and 2, the inventors thought that the reason is as follows: a polypropylene resin having low stereoregularity is used, the stretch ratio is low, and the heat treatment for stabilizing the structure after stretching is inappropriate, although an effect of improving the breakdown voltage is obtained by controlling the crystallite size, plane orientation, and birefringence.

Further, as for the polypropylene film described in Patent Document 3, the inventors thought that the reason is as follows: since the raw material contains an ethylene component, and no relaxation and heat treatment steps are carried out after the transverse stretching, the molecular chain orientation greatly shrinks in a high-temperature environment, and thus the thermal shrinkage rate does not decrease sufficiently.

Furthermore, as for the polypropylene film described in Patent Document 4, the inventors thought that the reason is as follows: since the heat treatment temperature after the transverse stretching is high, the heat treatment for stabilizing the molecular chain orientation structure is inappropriate.

As for the polypropylene film described in Patent Document 5, the inventors thought that the reason is as follows: since the raw material contains an ethylene component, and no relaxation and heat treatment steps are carried out after the transverse stretching, the molecular chain orientation greatly shrinks in a high-temperature environment, and thus the thermal shrinkage rate does not decrease sufficiently.

Based on these considerations, the present inventors further studied and found that the above-mentioned problems can be solved by the following matters: the crystal orientation degree of the polypropylene film is not less than a certain value, and the sum of thermal shrinkage rates in the width direction and the longitudinal direction after heat treatment under predetermined conditions is not more than a certain value. The present invention provides a polypropylene film as defined in the accompanying claim 1. This is described in the following as the 'first aspect'. The 'second aspect' is included for information only.

(1) A polypropylene film having a crystal orientation degree of an $\alpha$-crystal (110) plane measured by wide-angle X-ray diffractometry of 0.78 or more, a sum of thermal shrinkage rates in a width direction and a longitudinal direction after being subjected to heat treatment at 120°C for 10 minutes of 4.0% or less and a relationship between a stress at 5% elongation in the width direction (TD-F5 value) and a stress at 5% elongation in the longitudinal direction (MD-F5 value) / (TD-F5 value) > 0.45(first aspect).

(2) A polypropylene film having a thickness unevenness in a longitudinal direction of 0.1 to 6.0%, and having a sum of a maximum strength in the longitudinal direction and a maximum strength in a width direction of 400 MPa or more (second aspect).

EFFECTS OF THE INVENTION

According to the present invention, it is possible to provide a polypropylene film which exhibits a high breakdown voltage even in a high-temperature environment and which can exhibit withstand voltage and reliability even in a high-temperature environment when incorporated into a capacitor, a metal membrane layered film and a film capacitor including the polypropylene film, and methods for manufacturing the same.

BRIEF DESCRIPTION OF THE DRAWING

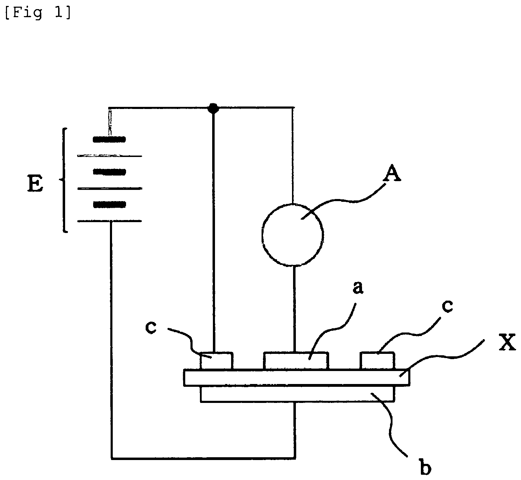

Fig. 1 is a schematic diagram showing a volume resistance measuring circuit.

EMBODIMENTS OF THE INVENTION

The polypropylene film according to the first aspect of the present invention has a crystal orientation degree of an $\alpha$-crystal (110) plane measured by wide-angle X-ray diffractometry of 0.78 or more, and has a sum of thermal shrinkage rates in a width direction and a longitudinal direction after being subjected to heat treatment at 120°C for 10 minutes of 4.0% or less. In the present invention, the "polypropylene film" may be sometimes referred to as a "film".

In the polypropylene film according to the first aspect of the present invention, the crystal orientation degree of the $\alpha$-crystal (110) plane of the polypropylene film measured by wide-angle X-ray diffractometry is 0.78 or more. The crystal orientation degree is preferably 0.80 or more, more preferably 0.81 or more. The upper limit is not particularly limited, but is set to 0.95. If the crystal orientation degree is less than 0.78, since the orientation order of the crystal structure constituting the film is disturbed, portions susceptible to dielectric breakdown are partially present. Thus, when the polypropylene film is incorporated into a capacitor, in a high-temperature environment, capacity reduction or short-circuit breakdown may occur, the withstand voltage may be lowered, and reliability may be impaired.

The polypropylene film according to the first aspect of the present invention has a sum of thermal shrinkage rates in a width direction and a longitudinal direction after being subjected to heat treatment at 120°C for 10 minutes of 4.0% or less from the viewpoint of ensuring dimensional stability in a high-temperature environment and obtaining high reliability when being incorporated into a capacitor. The sum of the above-mentioned thermal shrinkage rates in the polypropylene film according to the first aspect of the present invention is preferably 3.6% or less, more preferably 3.3% or less. The lower limit is not particularly limited, but it is set to 1% in view of the case where the wound state of the device is loosened due to the heat in the capacitor manufacturing process or use process. If the sum of the thermal shrinkage rates exceeds 4.0%, shrinkage of the film itself occurs due to the heat in the capacitor manufacturing process or use process, the withstand voltage of the device may lower due to poor contact with the metal-sprayed part at the end of the device, and tight winding of the device may cause capacity reduction or short-circuit breakdown.

Herein, the "longitudinal direction" of the polypropylene film in the first aspect of the present invention (and the second aspect) is the direction corresponding to the flow direction in the film manufacturing process (hereinafter sometimes referred to as "MD"), and the "width direction" thereof is the direction orthogonal to the flow direction in the film manufacturing process (hereinafter sometimes referred to as "TD"). For a polypropylene film whose flow direction in the film manufacturing process is unknown, the crystal orientation of the $\alpha$-crystal (110) plane of the polypropylene film is measured as follows by wide-angle X-ray diffractometry, and MD and TD are defined. Specifically, an X-ray is made incident on the film surface in a direction perpendicular thereto, a crystal peak at $2\theta$ = about 14° ($\alpha$-crystal (110) plane) is scanned in a circumferential direction, and a direction in which the diffraction intensity is the highest in the resulting diffraction intensity distribution is taken as MD, and a direction orthogonal to MD is taken as TD.

Through intensive studies, the present inventors have found that it is important to control and compatibilize the crystal orientation degree and the thermal shrinkage rate of the polypropylene film from the viewpoint of improving the breakdown voltage of the polypropylene film in a high-temperature environment, and obtaining withstand voltage and reliability in a high-temperature environment particularly in a high-voltage capacitor applications. Herein, the crystal orientation degree and the thermal shrinkage rate of the polypropylene film can be controlled within the above-mentioned ranges by the following means: controlling, within preferable ranges, the conditions such as the high meso-pentad fraction, use of a polypropylene raw material having a high melting point, and the cooling temperature at the time of cooling and solidification of the molten sheet that are described later; and setting the area ratio in the biaxial stretching to 50 times or more, and in the heat treatment and relaxation treatment steps after stretching, first, subjecting the film to heat treatment at a temperature lower than the stretching temperature in the width direction, and then appropriately subjecting the film to heat treatment at a temperature higher than the above-mentioned treatment temperature and lower than the stretching temperature in the width direction in the biaxial stretching.

The polypropylene film according to the first aspect of the present invention has a relationship between a stress at 5% elongation in the width direction (TD-F5 value) and a stress at 5% elongation in the longitudinal direction (MD-F5 value), that is, (MD-F5 value)/(TD-F5 value) more than 0.45, more preferably 0.5 or more. The upper limit of the value of (MD-F5 value) / (TD-F5 value) is not particularly limited, but it is set to 2.0. When the relationship of (MD-F5 value)/(TD-F5 value) is 0.4 or less, the crystal orientation degree tends to be low, and the order of the crystal structure constituting the film is disturbed. Therefore, portions susceptible to dielectric breakdown are partially present. Thus, when the polypropylene film is incorporated into a capacitor, in a high-temperature environment, capacity reduction or short-circuit breakdown may occur, the withstand voltage may be lowered, and reliability may be impaired. The relationship of (MD-F5 value)/(TD-F5 value) can be controlled within the preferable range of the present invention by the following means: setting the area ratio in the biaxial stretching to 50 times or more, and in the heat treatment and relaxation treatment steps after stretching, first, subjecting the film to heat treatment at a temperature lower than the stretching temperature in the width direction, and then appropriately subjecting the film to heat treatment at a temperature higher than the above-mentioned treatment temperature and lower than the stretching temperature in the width direction in the biaxial stretching.

The polypropylene film according to the first aspect of the present invention preferably has a relationship between the maximum strength (St) and the maximum elongation (El) in the longitudinal direction of (St)/(El) ≥ 1.2, more preferably (St)/(El) ≥ 1.6, still more preferably (St)/(El) ≥ 2.0. The upper limit of the value of (St)/(El) is not particularly limited, but it is set to 4.0. If the value of (St)/(El) is less than 1.2, it means that the film strength is substantially low, the breakdown voltage of the film in a high-temperature environment tends to be low, and the film may be broken in the step of forming a metal membrane by vapor deposition, or during film transport in the step of winding the capacitor device. In addition, when the polypropylene film is incorporated into a capacitor, in a high-temperature environment, capacity reduction or short-circuit breakdown may occur, the withstand voltage may be lowered, and reliability may be impaired. The value of (St)/(El) can be controlled within the above-mentioned range by the following means: setting the area ratio in the biaxial stretching to 50 times or more, and in the heat treatment and relaxation treatment steps after stretching, first, subjecting the film to heat treatment at a temperature lower than the stretching temperature in the width direction, and then appropriately subjecting the film to heat treatment at a temperature higher than the above-mentioned treatment temperature and lower than the stretching temperature in the width direction in the biaxial stretching.

The polypropylene film according to the first aspect of the present invention preferably has a stress at 50% elongation in the longitudinal direction at 125°C (F50 value) of 13 MPa or more, more preferably 15 MPa or more, still more preferably 17 MPa or more. The upper limit is not particularly limited, but is set to 30 MPa. If the F50 value is less than 13 MPa, the breakdown voltage of the film in a high-temperature environment tends to be low, and when the film is incorporated into a capacitor, in a high-temperature environment, capacity reduction or short-circuit breakdown may occur, the withstand voltage may be lowered, and reliability may be impaired. The F50 value can be controlled within the above-mentioned range by the following means: controlling, within preferable ranges, the conditions such as the high meso-pentad fraction, use of a polypropylene raw material having a high melting point, and the cooling temperature at the time of cooling and solidification of the molten sheet that are described later; and setting the area ratio in the biaxial stretching to 50 times or more, and in the heat treatment and relaxation treatment steps after stretching, first, subjecting the film to heat treatment at a temperature lower than the stretching temperature in the width direction, and then appropriately subjecting the film to heat treatment at a temperature higher than the above-mentioned treatment temperature and lower than the stretching temperature in the width direction in the biaxial stretching.

The polypropylene film according to the first aspect of the present invention preferably has a volume resistivity at 110°C of $5 \times 10^{14}$ $\Omega$·cm or more, more preferably $8 \times 10^{14}$ $\Omega$·cm or more, still more preferably $1 \times 10^{15}$ $\Omega$·cm or more. The upper limit is not particularly limited, but is set to $1 \times 10^{17}$ $\Omega$·cm. If the volume resistivity at 110°C is less than $5 \times 10^{14}$ $\Omega$·cm, when the polypropylene film is incorporated into a capacitor, the leakage current may be increased particularly in a high-temperature environment, so that capacity reduction or short-circuit breakdown due to self-heating of the capacitor may occur, the withstand voltage may be lowered, and reliability may be impaired. The volume resistivity at 110°C can be controlled within the above-mentioned range by the high meso-pentad fraction and use of a polypropylene raw material having a high melting point that are described later, and by setting the area ratio in the biaxial stretching to 50 times or more. Further, the volume resistivity can be further increased by the following means: controlling, within preferable ranges, the conditions such as the cooling temperature at the time of cooling and solidification of the molten sheet; and in the heat treatment and relaxation treatment steps after stretching, first, subjecting the film to heat treatment at a temperature lower than the stretching temperature in the width direction, and then appropriately subjecting the film to heat treatment at a temperature higher than the above-mentioned treatment temperature and lower than the stretching temperature in the width direction in the biaxial stretching.

The polypropylene film according to the first aspect of the present invention preferably has a glossiness of at least one surface of 130% or more and less than 150%, and preferably has, when being stacked, a coefficient of static friction ($\mu$s) of 0.1 or more and 1.5 or less.

If the glossiness is less than 130%, since the light scattering density at the film surface is high, the surface is excessively roughened, and the breakdown voltage may tend to lower. On the other hand, if the glossiness is 150% or more, it means that the surface is smoothed, and the film may tend to be extremely lowered in slidability. Therefore, the film may be poor in handleability, wrinkles tend to occur, and the device workability may be poor. The glossiness is more preferably 132% or more and less than 148%, still more preferably 135% or more and less than 146%.

In addition, if the coefficient of static friction ($\mu$s) when films are stacked is less than 0.1, the films slide excessively, so that winding deviation may occur during winding at the time of film formation or device processing. If $\mu$s exceeds 1.5, the film may be extremely lowered in slidability and poor in handleability, so that wrinkles tend to occur and the device workability may be poor. $\mu$s is more preferably 0.1 or more and 1.2 or less, still more preferably 0.3 or more and 1 or less, most preferably 0.5 or more and 0.9 or less. In the polypropylene film according to the first aspect of the present invention, it is preferable to compatibilize both the glossiness and the coefficient of static friction ($\mu$s) within the above-mentioned preferable ranges from the viewpoint of improving the device workability while improving the withstand voltage. The compatibility between the glossiness and the coefficient of static friction ($\mu$s) within the above-mentioned preferable ranges.can be achieved by controlling, within preferable ranges, the conditions such as the used raw materials, and the cooling temperature and the stacked resin constitution at the time of cooling and solidification of the molten sheet that are described later.

The polypropylene film according to the first aspect of the present invention preferably has a three-dimensional center plane average roughness SRa of at least one surface of 10 nm or more and 300 nm or less, more preferably 20 nm or more and 150 nm or less, still more preferably 30 nm or more and 70 nm or less from the viewpoint of moderately roughening the surface, and achieving uniformity of gaps between film layers, easy slidability between films or between a film and a transfer roll, workability during the production of a capacitor device, and reliability as a capacitor. If the SRa of at least one surface is less than 10 nm, the film may be extremely lowered in slidability and poor in handleability, so that wrinkles tend to occur and the device workability may be poor. Moreover, when the film is continuously used as a capacitor, change in capacitance may increase due to the influence of wrinkles or the like, or the reliability of a capacitor obtained by stacking the films may be lowered because there is no moderate gap between film layers and therefore a self-healing function is hardly exerted. The SRa of the polypropylene film according to the first aspect of the present invention can be controlled within the above-mentioned preferable range by controlling, within preferable ranges, the conditions such as the high meso-pentad fraction, use of a polypropylene raw material having a high melting point, and the cooling temperature at the time of cooling and solidification of the molten sheet that are described later, and the stacked resin constitution.

The polypropylene film according to the first aspect of the present invention preferably has a ten-point average roughness SRz of at least one surface of 130 nm or more and 2,000 nm or less, more preferably 200 nm or more and 1,500 nm or less, still more preferably 300 nm or more and 1,000 nm or less from the viewpoint of moderately roughening the surface, and achieving uniformity of gaps between film layers, easy slidability between films or between a film and a transfer roll, workability during the production of a capacitor device, and reliability as a capacitor. If the SRz of at least one surface is less than 130 nm, the film may be extremely lowered in slidability and poor in handleability, so that wrinkles tend to occur and the device workability may be poor. Moreover, when the film is continuously used as a capacitor, change in capacitance may increase due to the influence of wrinkles or the like, or the reliability of a capacitor obtained by stacking the films may be lowered because there is no moderate gap between film layers and therefore a self-healing function is hardly exerted. The SRz of the polypropylene film according to the first aspect of the present invention can be controlled within the above-mentioned preferable range by controlling, within preferable ranges, the conditions such as the high meso-pentad fraction, use of a polypropylene raw material having a high melting point, and the cooling temperature at the time of cooling and solidification of the molten sheet that are described later, and the stacked resin constitution.

The polypropylene film according to the first aspect of the present invention may contain particles or a resin other than the polypropylene in at least one surface as long as the object of the present invention is not impaired. Examples of the used particles include inorganic particles and organic particles. Examples of the inorganic particles include metal oxides such as silica, alumina, titania, and zirconia, barium sulfate, calcium carbonate, aluminum silicate, calcium phosphate, mica, kaolin, and clay. Of these, metal oxides such as silica, alumina, titania, and zirconia, and calcium carbonate are preferable. Examples of the organic particles include crosslinked particles of a polymethoxysilane-based compound, crosslinked particles of a polystyrene-based compound, crosslinked particles of an acrylic compound, crosslinked particles of a polyurethane-based compound, crosslinked particles of a polyester-based compound, crosslinked particles of a fluorine-based compound, and mixtures thereof. The average particle size of the inorganic particles and the organic particles is preferably in the range of 0.03 to 10 $\mu$m. The average particle size is more preferably 0.05 to 5 $\mu$m, still more preferably 0.07 to 1 $\mu$m, most preferably 0.09 to 0.3 $\mu$m. If the average particle size is less than 0.03 $\mu$m, the polypropylene film has a low surface roughness, and the polypropylene film may be insufficient in handleability or the capacitor reliability may be lowered. On the other hand, if the average particle size exceeds 10 $\mu$m, the film tends to break easily or falls off from a thin film, which may easily cause insulation defects. The content (total amount) of the particles is preferably 0.01 to 1 part by mass relative to 100 parts by mass in total of the amount of the polypropylene resin and the particles that constitute the surface layer. If the content is less than 0.01 parts by mass, the polypropylene film may be insufficient in handleability or the capacitor reliability may be lowered. If the content exceeds 1 part by mass, the film tends to break easily or falls off from a thin film, which may easily cause insulation defects. The content of the particles is more preferably 0.02 to 0.8 parts by mass, still more preferably 0.04 to 0.6 parts by mass. Examples of the resin other than the polypropylene include vinyl polymer resins containing various polyolefin-based resins, polyester-based resins, polyamide-based resins, polyphenylene sulfide-based resins, polyimide-based resins, and polycarbonate-based resins. Particularly preferable examples include polymethylpentene, a cycloolefin copolymer, a cycloolefin polymer, and syndiotactic polystyrene.

The polypropylene film according to the first aspect of the present invention can have, on at least one surface thereof, surface irregularities imparted by use of a sea-island structure formed of a resin constitution including a blend of a polypropylene and a thermoplastic resin incompatible with the polypropylene. As the thermoplastic resin incompatible with the polypropylene, a resin other than the above-mentioned polypropylene can be used. A polymethylpentene-based resin is particularly preferable since it is incompatible with the polypropylene but has relatively high affinity with the polypropylene, and can reduce the domain size. The content of the thermoplastic resin incompatible with the polypropylene is preferably 0.5 parts by mass or more and 5.0 parts by mass or less, more preferably 0.8 parts by mass or more and 4.5 parts by mass or less, still more preferably 1.0 part by mass or more and 4.0 parts by mass or less relative to 100 parts by mass in total of the polypropylene resin and the thermoplastic resin incompatible with the polypropylene that constitute the surface layer. If the content of the thermoplastic resin incompatible with the polypropylene is 5.0 parts by mass or more, the influence of the domain boundary is large, so that the breakdown voltage in a high-temperature environment may be lowered. On the other hand, if the proportion of a layer A is too small, irregularities may not be efficiently formed in the film surface, so that the capacitor device workability may not be obtained.

When a constituent layer containing particles or a thermoplastic resin incompatible with the polypropylene is provided on at least one surface, it is preferable to form a layered film including the constituent layer. Examples of the stacking method include a method of bonding films together by lamination, a feed block method by coextrusion, a multi-manifold method, and a method by coating. Among these stacking methods, a stacking method by melt coextrusion and a stacking method by coating are preferable from the viewpoint of production efficiency and cost. Further, it is preferable that two or more layers be stacked in the film thickness direction. More specifically, the film has a structure including two or more layers in which at least one surface layer is the layer A. For example, the film may have a two-layer structure of layer A/layer B, a three-layer structure of layer A/layer B/layer A, or a structure including four or more layers with the layer A serving as the outermost layer of both the surfaces of the film. Herein, the layer A is defined as a constituent layer containing particles.

When the polypropylene film according to the first aspect of the present invention has a structure in which two or more layers are stacked in the thickness direction, the percentage of the thickness of the layer A (when the polypropylene film has layers A on both surfaces, the ratio of the thickness of both the surface layers) in the total thickness of the film is preferably 1 to 60%, more preferably 5 to 50%, still more preferably 10 to 40% from the viewpoint of the film forming property and controlling the surface shape. If the percentage of the layer A is too high, the influence of the domain boundary of particles or thermoplastic resin incompatible with the polypropylene is large, so that the breakdown voltage in a high-temperature environment may be lowered. On the other hand, if the percentage of the layer A is too low, irregularities may not be efficiently formed in the film surface, so that the capacitor device workability may not be obtained. In particular, in the case of a film having a total thickness of 3.0 $\mu$m or less, the stacked structure described above may facilitate the effect of improving the capacitor device workability. The film thickness of the layer on one side constituting the layer A is preferably less than 1.0 $\mu$m, more preferably 0.8 $\mu$m or less, still more preferably 0.6 $\mu$m or less. Herein, the presence of each layer can be identified, for example, by forming a cross section of a film and observing the cross section using a scanning electron microscope (SEM) or the like to determine the layer A containing particles or a thermoplastic resin incompatible with the polypropylene, or the resin interface between the layer A and the layer B.

The polypropylene which is preferably used in the polypropylene film according to the first aspect of the present invention is usually used in packaging materials and capacitors. The polypropylene preferably has a cold xylene soluble component (hereinafter referred to as a CXS) of 4% by mass or less. If the condition is not satisfied, the polypropylene film may be poor in film formation stability, or voids may be formed in the film during production of a biaxially stretched film, so that the breakdown voltage may be largely lowered.

Herein, the "cold xylene soluble component (CXS)" refers to a polypropylene component dissolved in xylene that is obtained by completely dissolving a film in xylene and then precipitating the resultant at room temperature. This component is thought to correspond to a component which is hardly crystallized because of low stereoregularity or a low molecular weight. When the resin contains a large amount of such a component, the film may have problems that the film is lowered in the breakdown voltage or the leakage current is increased. Accordingly, the CXS is preferably 4% by mass or less, more preferably 3% by mass or less, particularly preferably 2% by mass or less. For obtaining a polypropylene having such a CXS, it is possible to employ, for example, a method of improving the catalytic activity in obtaining a resin, or a method of washing the obtained resin with a solvent or a propylene monomer itself.

The polypropylene used in the polypropylene film according to the first aspect of the present invention preferably has a melt flow rate (MFR) of 1 to 10 g/10 min (230°C, load: 21.18 N), more preferably 2 to 5 g/10 min (230°C, load: 21.18 N) from the viewpoint of film forming property. In order to set the melt flow rate (MFR) to a value within the above-mentioned range, a method of controlling the average molecular weight or molecular weight distribution is employed.

The polypropylene used in the polypropylene film according to the first aspect of the present invention is mainly made of a homopolymer of propylene, but the polypropylene may contain a copolymerizing component based on another unsaturated hydrocarbon, or may be blended with a polymer that is not a homopolymer of propylene as long as the object of the present invention is not impaired. Examples of monomer components constituting such a copolymerizing component or blended polymer include ethylene, propylene (in the case of a copolymerized blend), 1-butene, 1-pentene, 3-methylpentene-1, 3-methylbutene-1, 1-hexene, 4-methylpentene-1, 5-ethylhexene-1, 1-octene, 1-decene, 1-dodecene, vinylcyclohexene, styrene, allylbenzene, cyclopentene, norbornene, and 5-methyl-2-norbornene. As for the amount of copolymerization or the blend, it is preferable that the former be less than 1 mol% and the latter be less than 10% by mass from the viewpoint of breakdown voltage and heat resistance.

The polypropylene used in the polypropylene film according to the first aspect of the present invention may contain various additives such as a crystal nucleating agent, an antioxidant, a heat stabilizer, a sliding agent, an antistatic agent, an antiblocking agent, a filler, a viscosity adjustor, a coloring inhibitor, and a resin other than the polypropylene as long as the object of the present invention is not impaired.

Among these additives, selection of the type and addition amount of the antioxidant is important from the viewpoint of long-term heat resistance. That is, the antioxidant is preferably phenolic compounds having steric hindrance, and at least one of the compounds is of a high molecular weight type and has a molecular weight of 500 or more. Specific examples thereof include various antioxidants, and it is preferable to use, for example, 2,6-di-t-butyl-p-cresol (BHT: molecular weight 220.4) in combination with 1,3,5-trimethyl-2,4,6-tris(3,5-di-t-butyl-4-hydroxybenzyl)b enzene (e.g., Irganox (registered trademark) 1330 manufactured by BASF Japan Ltd.: molecular weight 775.2) or tetrakis[methylene-3(3,5-di-t-butyl-4-hydroxyphenyl)propion ate]methane (e.g., Irganox (registered trademark) 1010 manufactured by BASF Japan Ltd. : molecular weight 1177.7). The total content of these antioxidants is preferably in the range of 0.03 to 1.0% by mass based on the total amount of the polypropylene. If the amount of the antioxidant is too small, the film may be poor in the long-term heat resistance. If the amount of the antioxidant is too large, the capacitor device may be adversely affected due to blocking at high temperatures resulting from bleeding out of the antioxidant. The total content is more preferably 0.1 to 0.9% by mass, particularly preferably 0.2 to 0.8% by mass.

The polypropylene film according to the first aspect of the present invention preferably contains a polypropylene resin having a meso-pentad fraction of 0.95 or more and a melting point more than 160°C. The meso-pentad fraction is more preferably 0.97 or more, still more preferably 0.98 or more.

The meso-pentad fraction is an index of stereoregularity of a crystal phase of a polypropylene measured by a nuclear magnetic resonance method (NMR method), and a polypropylene having a higher meso-pentad fraction is preferable because it has higher degree of crystallinity, higher melting point, and higher breakdown voltage in a high-temperature environment. The upper limit of the meso-pentad fraction is not particularly specified. In order to obtain such a polypropylene having a high meso-pentad fraction and a high melting point, for example, a method of selecting an appropriate electron-donating component in the so-called Ziegler-Natta catalyst is preferably employed. If the meso-pentad fraction of the polypropylene resin is less than 0.95, since the regularity of the polypropylene is low, the strength or breakdown voltage of the film in a high-temperature environment may be lowered, and the film may be broken in the step of forming a metal membrane by vapor deposition, or during film transport in the step of winding the capacitor device. The melting point of the polypropylene resin is more preferably 163°C or more, still more preferably 165°C or more. If the melting point is 160°C or less, since the crystallinity is low, the breakdown voltage of the film in a high-temperature environment may be lowered, and the film may be broken in the step of forming a metal membrane by vapor deposition, or during film transport in the step of winding the capacitor device.

The polypropylene film according to the first aspect of the present invention is excellent in transparency, slidability, and high temperature characteristics, and is therefore suitably used in general industrial applications and packaging applications. The polypropylene film is of course useful for general capacitors having a thickness of 30 μm or less, and is particularly suitable for thin film heat-resistant film capacitors required for applications of automobiles (including a hybrid car application) which are used in a high-temperature environment. In particular, the film thickness is preferably in the range of 0.5 μm or more and less than 15 μm, more preferably 0.5 μm or more and 6 μm or less, still more preferably 0.8 μm or more and 3.0 μm or less, most preferably 0.9 μm or more and 2.8 μm or less.

The polypropylene film according to the first aspect of the present invention is preferably used as a dielectric film for a capacitor, but it is not limited to a capacitor type film. Specifically, the polypropylene film may be used in either of a foil-wound capacitor and a metal evaporated film capacitor from the viewpoint of electrode configuration, and is also preferably used in an oil-impregnated capacitor impregnated with an insulating oil or a dry capacitor that does not contain an insulating oil at all. Further, the form of the capacitor may be a wound type or a stacked type. The polypropylene film of the present invention, however, is particularly preferably used as a metal evaporated film capacitor in view of the film characteristics.

A polypropylene film is generally low in surface energy, and is difficult to be stably subjected to metal vapor deposition. Therefore, it is preferable to surface-treat the polypropylene film before vapor deposition for the purpose of improving the adhesion force to the metal. Specific examples of the surface treatment include corona discharge treatment, plasma treatment, glow treatment, and flame treatment. While the surface wet tension of a polypropylene film is generally about 30 mN/m, it is preferable to increase the wet tension of a polypropylene film to 37 to 75 mN/m, preferably to 39 to 65 mN/m, most preferably to about 41 to 55 mN/m by the surface treatment because adhesion to a metal membrane and security are improved.

The polypropylene film according to the first aspect of the present invention is preferably obtained by subjecting at least one surface to plasma treatment. Compared to the corona discharge treatment, the plasma treatment is capable of uniformly treating the film surface and increasing the surface wet tension. Further, it is possible to enhance this effect also by the gas of the treatment atmosphere. The polypropylene film according to the first aspect of the present invention is preferably subjected to the plasma treatment at atmospheric pressure. As the atmospheric gas, oxygen, nitrogen, hydrogen, argon, carbon dioxide gas, silane gas, and the like can be used. Nitrogen gas or a mixed gas containing nitrogen gas is particularly preferable, and nitrogen gas is most preferable. Although the reason is not clear, it is thought that the gas can impart, in addition to the functional groups of C-O (ether group, hydroxy group), C=O (carbonyl group), and O=C-O (ester group, carboxy group) derived from the plasma treatment, the functional groups of C-N and N-C=O (amide group) derived from the nitrogen element uniformly to the film surface, and improve adhesion and uniformity of a metal evaporated film containing aluminum, zinc, or an alloy of these, so that the withstand voltage and reliability of the capacitor can be improved.

Herein, defining the polypropylene film according to the first aspect of the present invention as being "obtained by subjecting at least one surface to plasma treatment" as described above means that the definition fall under "the case where a claim of a product includes a description of a manufacturing method of the product", and the description of the claim may be judged not to meet the requirement "the invention is clear". However, as described later, it is generally difficult to "directly specify" whether the film is subjected to the plasma treatment or not "by the structure or characteristics" of the film, although it is sometimes possible to directly specify the above depending on the kind of the atmospheric gas used. Therefore, the above-mentioned .definition is thought to have "circumstances that it is impossible or impractical to directly identify the product by its structure or characteristics at the time of application (impossible or impractical circumstances)".

The polypropylene film according to the first aspect of the present invention preferably has a nitrogen element composition amount detected by X-ray photoelectron spectroscopy (XPS) of 1 atomic% or more in at least one surface. The nitrogen element composition amount is more preferably 4 atomic% or more, still more preferably 8 atomic% or more. The upper limit of the nitrogen element composition amount is not particularly limited, but is set to 20 atomic%. The nitrogen element composition amount can be appropriately adjusted by the atmospheric gas and discharge treatment intensity. Further, the oxygen concentration in the atmosphere in which the plasma treatment is carried out at atmospheric pressure is preferably 1 ppm or more and 500 ppm or less (volume basis, the same applies hereinafter), more preferably 5 ppm or more and 100 ppm or less, still more preferably 10 ppm or more and 50 ppm or less. If the oxygen concentration is less than 1 ppm, it may be difficult to obtain the sufficient effect of imparting functional groups. On the other hand, if the oxygen concentration exceeds 500 ppm, the oxidation and deterioration of the film progress, and the capacitor may be lowered in the withstand voltage and reliability. The discharge treatment intensity is preferably 20 to 300 W·min/m$^2$, more preferably 35 to 260 W·min/m$^2$, still more preferably 50 to 220 W·min/m$^2$, most preferably 60 to 180 w·min/m$^2$. If the treatment intensity is less than 20 W·min/m$^2$, it is sometimes impossible to uniformly impart sufficient functional groups to the film surface, whereas if it exceeds 300 W·min/m$^2$, impartment of the functional groups is saturated, strong thermal damage is given to the film, and insulation defects may be generated. Whether or not the film is subjected to the plasma treatment may be confirmed by the element composition of one surface of the film detected by the X-ray photoelectron spectroscopy (XPS) described above. For a polypropylene film not having been subjected to surface treatment, only -C is detected, and for a corona-treated polypropylene film, only -C and -O are detected. On the contrary, in a plasma-treated polypropylene film, an element composition other than -C and -O may be detected.

The polypropylene film according to the first aspect of the present invention is obtained by subjecting raw materials capable of giving the above-mentioned characteristics to biaxial stretching, heat treatment, and relaxation treatment. As a method of biaxial stretching, any of inflation simultaneous biaxial stretching, tenter simultaneous biaxial stretching, and tenter sequential biaxial stretching may be employed. Among these methods, tenter sequential biaxial stretching is preferably employed from the viewpoint of controlling the film formation stability, crystal and amorphous structures, surface characteristics, mechanical characteristics, and thermal dimensional stability.

Then, the polypropylene film according to the second aspect will be described, for information only.

The polypropylene film according to the second aspect has a thickness unevenness in a longitudinal direction of 0.1 to 6.0%, and has a sum of the maximum strength in the longitudinal direction and the maximum strength in a width direction of 400 MPa or more.

In the polypropylene film according to the second aspect, the thickness unevenness in the longitudinal direction is 0.1 to 6.0%. If the thickness unevenness in the longitudinal direction exceeds 6.0%, concerns such as a decrease in breakdown voltage and breakage of the film during film formation in a thin portion of the film, and deterioration of the appearance may become apparent. Therefore, the yield may be decreased, and capacity reduction or short-circuit breakdown may occur when the film is incorporated into a capacitor, and the withstand voltage and reliability in a high-temperature environment may be lowered. From the above-mentioned viewpoint, the thickness unevenness in the longitudinal direction is more preferably 0.1 to 4.5%, still more preferably 0.1 to 3.0%.

Furthermore, the polypropylene film according to the second aspect has a sum of the maximum strength in the longitudinal direction and the maximum strength in the width direction of 400 MPa or more. If the sum is less than 400 MPa, the breakdown voltage of the polypropylene film in a high-temperature environment may be lowered, or a short circuit may occur when a foreign matter is mixed. In addition, capacity reduction or short-circuit breakdown may occur when the film is incorporated into a capacitor, and the withstand voltage and reliability in a high-temperature environment may be lowered. From the above-mentioned viewpoint, the sum of the maximum strength in the longitudinal direction and the maximum strength in the width direction is more preferably 460 MPa or more, still more preferably 560 MPa or more. The upper limit is not particularly limited, but is set to 800 MPa since the film flexibility may be impaired and the film may be poor in handleability if the film is too high in stiffness.

Through intensive studies, the inventors have found the following matter: the thickness unevenness in the longitudinal direction as well as the sum of the maximum strength in the longitudinal direction and the maximum strength in the width direction have a high correlation with the yield of the polypropylene film and the breakdown voltage in a high-temperature environment, and, in addition, in order to improve the withstand voltage and reliability in a high-temperature environment when the film is incorporated into a capacitor, it is important to reduce the thickness unevenness in the longitudinal direction and to control the sum of the maximum strength in the longitudinal direction and the maximum strength in the width direction to a large value. Herein, as a method for controlling the thickness unevenness in the longitudinal direction as well as the sum of the maximum strength in the longitudinal direction and the maximum strength in the width direction within such ranges, for example, the following methods are preferable: set the raw material composition of the film within the range described later, and use a homopolypropylene resin having high stereoregularity; and set the casting conditions and the longitudinal stretching conditions within the ranges described later, and increase the mesomorphic phase fraction of the unstretched polypropylene film to impart a mesomorphic phase structure to the unstretched polypropylene film.

The polypropylene film according to the second aspect has a thermal shrinkage rate in the longitudinal direction after heat treatment at 125°C for 15 minutes and a thermal shrinkage rate in the width direction after heat treatment at 125°C for 15 minutes of both 2.0% or less. The value of the thermal shrinkage rate in the longitudinal direction after heat treatment at 125°C for 15 minutes is more preferably 1.7% or less, still more preferably 1.4% or less. Further, the value of the thermal shrinkage rate in the width direction after heat treatment at 125°C for 15 minutes is more preferably 1.5% or less, still more preferably 1.0% or less, most preferably 0.5% or less. The lower limit of the thermal shrinkage rate is not particularly limited, but is preferably -1.0% in either of the above-mentioned directions. This is because the wound state of the device may be loosened due to the heat in the capacitor manufacturing process or use process if the film is excessively expanded. If the thermal shrinkage rate exceeds 2.0%, the amount of thermal deformation in a high-temperature environment is large, the film itself shrinks due to the heat in the capacitor manufacturing and use processes, a gap may be generated between the films, and the withstand voltage may be lowered. Herein, as a method for controlling the thermal shrinkage rate within such a range, for example, the following methods are preferable: set the raw material composition of the film within the range described later, and use a homopolypropylene resin having high stereoregularity; and set the casting conditions and the longitudinal stretching conditions within the ranges described later, and increase the mesomorphic phase fraction of the unstretched polypropylene film.

The polypropylene film according to the second aspect preferably has a maximum strength in the longitudinal direction measured at 125°C of 80 MPa or more. The maximum strength in the longitudinal direction is more preferably 95 MPa or more, still more preferably 110 MPa or more. If the maximum strength in the longitudinal direction measured at 125°C is less than 80 MPa, the breakdown voltage of the polypropylene film in a high-temperature environment may be lowered, or a short circuit may occur when a foreign matter is mixed. In addition, capacity reduction or short-circuit breakdown may occur when the film is incorporated into a capacitor, and the withstand voltage and reliability in a high-temperature environment may be lowered. Herein, as a method for controlling the maximum strength in the longitudinal direction measured at 125°C within such a range, for example, the following methods are preferable: set the raw material composition of the film within the range described later, and use a homopolypropylene resin having high stereoregularity; and set the casting conditions and the longitudinal stretching conditions within the ranges described later, and increase the mesomorphic phase fraction of the unstretched polypropylene film.

The polypropylene film according to the second aspect preferably has a total haze of 0.01 to 1.0%. The total haze is more preferably 0.01 to 0.6%, still more preferably 0.01 to 0.4%. If the total haze exceeds 1.0%, in capacitor applications, film breakage may occur particularly in the case of a thin film during vapor deposition of a metal layer or the like. The cause of the film breakage is thought to micro voids inside the film originating from the $\beta$-crystal of the polypropylene. Herein, as a method for controlling the total haze within such a range, for example, the following methods are preferable: set the raw material composition of the film within the range described later, and use a homopolypropylene resin having high stereoregularity; set the casting conditions within the range described later, and increase the mesomorphic phase fraction of the unstretched polypropylene film; and set the longitudinal stretching conditions within the range described later.

The polypropylene film according to the second aspect is preferably obtained by stretching an unstretched polypropylene film having a mesomorphic phase structure 2 times or more in at least one direction. The mesomorphic phase fraction is preferably 20% or more, more preferably 40% or more, still more preferably 60% or more, most preferably 80% or more, still more preferably 90% or more.

Herein, defining the polypropylene film according to the second aspect as being "obtained by stretching an unstretched polypropylene film having a mesomorphic phase structure 2 times or more in at least one direction" as described above means that the definition fall under "the case where a claim of a product includes a description of a manufacturing method of the product", and the description of the claim may be judged not to meet the requirement "the invention is clear". However, it is generally difficult to "directly specify" whether the unstretched polypropylene film generally used as a raw material has a mesomorphic phase structure or not "by the structure or characteristics" of the stretched polypropylene film. Therefore, the above-mentioned definition is thought to have "circumstances that it is impossible or impractical to directly identify the product by its structure or characteristics at the time of application (impossible or impractical circumstances)".

As for the polypropylene film according to the second aspect, it is conceivable to employ a technique of using a copolymer component such as a propylene-ethylene copolymer as a stretching aid in order to achieve good thickness unevenness. If a large amount of the stretching aid is used, however, the mechanical characteristics of the film may be deteriorated, and the thermal shrinkage rate may increase. In addition, a method of setting the stretch ratio to a high value is also conceivable, but the thermal shrinkage rate may increase.

Therefore, as a technique for improving the thickness unevenness of the polypropylene film according to the second aspect, the inventors conceived an idea of forming a mesomorphic phase at the stage of the unstretched polypropylene film. The mesomorphic phase is an intermediate phase between a crystal phase and an amorphous phase, and is specifically formed when the film in a molten state is solidified at a very high cooling rate. It is generally known that spherulites grow when a polypropylene is crystallized. It is believed that when a crystallized unstretched polypropylene film is stretched, a difference in stretching stress is produced between the spherulite portion and the amorphous portion in between spherulites, which produces local stretching unevenness and increases thickness unevenness. Meanwhile, since the mesomorphic phase does not produce spherulites, stretching unevenness does not occur and good thickness unevenness is achieved. In order to efficiently form a mesomorphic phase with an unstretched polypropylene film, it is necessary to suppress crystal formation. However, the polypropylene is very easy to generate crystals since it is a crystalline polymer. In particular, a homopolypropylene resin having high stereoregularity is very likely to cause crystal formation and consequently inhibit formation of a mesomorphic phase. Therefore, in order to suppress crystal formation, generally, a polypropylene resin having a low meso-pentad fraction is used, or a technique of using a copolymer such as a propylene-ethylene copolymer is employed. However, such means may deteriorate the mechanical characteristics of the film in a high-temperature environment, or increase the thermal shrinkage rate.

As a result of intensive studies, the present inventors have succeeded in suppressing crystal formation and forming a mesomorphic phase using a homopolypropylene resin having high stereoregularity, and have found that a surprising improvement effect can be exerted not only on the thickness unevenness of the polypropylene film, but also on the mechanical characteristics, breakdown voltage, thermal shrinkage rate, and the like. Thus, the present inventors have completed the present invention. As a technique for suppressing crystal formation, for example, there are the following techniques: setting the temperature of the casting drum to 40°C or less, setting the thickness of the unstretched polypropylene film to 300 $\mu$m or less, sending cold air to the unstretched polypropylene film on the casting drum to increase the cooling efficiency, and setting the temperature of the lip portion of the die to a temperature higher than the temperature of the upstream short pipe portion. It is speculated that the effect of raising the temperature of the die lip portion can reduce the friction between the polymer and the lip portion and suppress crystallization caused by shearing.

The polypropylene film according to the second aspect preferably contains a polypropylene resin having a meso-pentad fraction of 0.97 or more and a crystallization temperature (Tmc) of 115°C or less. It is very important to use a polypropylene having very high regularity and crystallinity in order to exhibit the effect. The meso-pentad fraction is more preferably 0.97 or more, still more preferably 0.975 or more, particularly preferably 0.98 or more. The meso-pentad fraction is an index of stereoregularity of a crystal phase of a polypropylene measured by a nuclear magnetic resonance method (NMR method), and a polypropylene having a higher meso-pentad fraction is preferable because it has higher degree of crystallinity, higher melting point, higher mechanical strength, and higher breakdown voltage. The upper limit of the meso-pentad fraction is not particularly specified. In the present invention, a polypropylene resin having a high meso-pentad fraction is particularly preferably formed by a so-called Ziegler-Natta catalyst, and a method of selecting an appropriate electron-donating component or the like is preferably employed. The resulting polypropylene resin has a molecular weight distribution (Mw/Mn) of 3.0 or more, and <2,1> erythro regio-defects of 0.1 mol% or less, and it is preferable to use such a polypropylene resin. If the meso-pentad fraction of the polypropylene resin is less than 0.95, the polypropylene has low regularity and is poor in film stiffness, so that the withstand voltage of the film may be low, and the film may be broken in the step of forming a metal membrane by vapor deposition, or during film transport in the step of winding the capacitor device. The Tmc of the polypropylene resin is more preferably 115°C or less, still more preferably 113°C or less, most preferably 111°C or less. If the Tmc is higher than 115°C, the crystal-forming ability is high, and it may become difficult to form a mesomorphic phase in an unstretched sheet.

The polypropylene film according to the second aspect is preferably obtained by stretching an unstretched polypropylene film having the above-mentioned mesomorphic phase structure 2 times or more in at least one direction. By stretching the film 2 times or more in at least one direction, the molecular chain can be extended to have an oriented structure, the mechanical characteristics of the film are improved, and the withstand voltage and reliability in a high-temperature environment when the film is incorporated into a capacitor can be improved. From this viewpoint, the stretch ratio is preferably 4.6 times or more, more preferably 5.4 times or more. The upper limit is not particularly limited, but is set to 15 times from the viewpoint of film formation stability.

The polypropylene film according to the second aspect is excellent in thickness unevenness, mechanical characteristics, and thermal shrinkage rate, and is therefore suitably used in general industrial applications and packaging applications. In particular, since the polypropylene film is excellent in the thickness unevenness in a thin film and mechanical characteristics, it is naturally useful for a film for common capacitors generally having a thickness of 15 $\mu$m or less, and is particularly suitable for a thin film heat-resistant film capacitor required for applications of automobiles (including a hybrid car application) which is used in a high-temperature environment. In particular, the thickness of the film is preferably in the range of 0.5 $\mu$m or more and less than 11 $\mu$m, more preferably 0.5 $\mu$m or more and 7 $\mu$m or less, still more preferably 0.8 $\mu$m or more and 5.0 $\mu$m or less. In the application of the heat-resistant film capacitor, the thickness is most preferably 0.8 $\mu$m or more and 3.8 $\mu$m or less from the balance between characteristics and the capacitor size in view of reduction of the film thickness.

The polypropylene film according to the second aspect is preferably used as a dielectric film for a capacitor, but it is not limited to a capacitor type film. Specifically, the polypropylene film may be used in either of a foil-wound capacitor and a metal evaporated film capacitor from the viewpoint of electrode configuration, and is also preferably used in an oil-impregnated capacitor impregnated with an insulating oil or a dry capacitor that does not contain an insulating oil at all. Further, the form of the capacitor may be a wound type or a stacked type. The polypropylene film of the present invention, however, is particularly preferably used as a metal evaporated film capacitor in view of the film characteristics.

A polypropylene film is generally low in surface energy, and is difficult to be stably subjected to metal vapor deposition. Therefore, it is preferable to surface-treat the polypropylene film before vapor deposition for the purpose of improving the adhesion force to the metal. Specific examples of the surface treatment include corona discharge treatment, plasma treatment, glow treatment, and flame treatment. While the surface wet tension of a polypropylene film is generally about 30 mN/m, it is preferable to increase the wet tension of a polypropylene film to 37 to 50 mN/m, preferably to about 39 to 48 mN/m by the surface treatment because adhesion to a metal membrane and security are improved.

The polypropylene film according to the second aspect is obtained by biaxially stretching a raw material which can give the above-mentioned characteristics. As a method of biaxial stretching, any of inflation simultaneous biaxial stretching, tenter simultaneous biaxial stretching, and tenter sequential biaxial stretching may be employed. Among these methods, tenter sequential biaxial stretching is preferably employed from the viewpoint of controlling the film formation stability, thickness uniformity, maximum strength of the film, and thermal dimensional stability. The polypropylene film of the present invention may be a monolayer film or a layered film. Examples of the stacking method include a method of bonding films together by lamination, a feed block method by coextrusion, a multi-manifold method, and a method by coating. Two or more layers may be stacked in the film thickness direction.

Then, a method for manufacturing the polypropylene film according to the first aspect of the present invention will be described. Although the method will be described more specifically below, it is not necessarily limited to this method. First, a polypropylene resin is melt-extruded onto a support to form an unstretched polypropylene film. This unstretched polypropylene film is stretched in the longitudinal direction, and then stretched in the width direction to be sequentially biaxially stretched. Then, the polypropylene film is subjected to heat treatment and relaxation treatment to produce a biaxially oriented polypropylene film. In this case, it is preferable to stretch the film at an area ratio of 50 times or more. In the heat treatment step and the relaxation treatment step after the biaxial stretching, it is preferable that the film be first subjected to heat treatment at a temperature lower than the stretching temperature in the width direction (first stage heat treatment step), and then the film be subjected to heat treatment at a temperature higher than the above-mentioned treatment temperature and lower than the stretching temperature in the width direction during the biaxial stretching (second stage heat treatment step), since the effect of the present invention can be more easily obtained. Although the method will be described more specifically below, it is not necessarily limited to this method.

First, a polypropylene resin is melt-extruded from a single-screw extruder, passed through a filtration filter, and then extruded from a slit-shaped die at a temperature of 230 to 280°C, more preferably 230 to 260°C. In the case of a film having a stacked structure, the unstretched polypropylene film is obtained in the following manner: a raw material A prepared by preliminarily compounding, into a polypropylene resin, particles or a resin incompatible with the polypropylene resin is supplied to a single-screw extruder for the layer A, a polypropylene resin raw material B is supplied to a single-screw extruder for the layer B, the raw materials are melted and co-extruded from a slit-shaped die at 200 to 280°C, more preferably at 200 to 260°C by a feed block method to form a resin stacked in a three-layer structure of layer A/layer B/layer A as a molten sheet, and the sheet is solidified on a cooling drum controlled to a temperature of 10 to 110°C to obtain an unstretched polypropylene film.

The unstretched polypropylene film more preferably has a mesomorphic phase structure. The mesomorphic phase fraction is preferably 20% or more, more preferably 40% or more, still more preferably 70% or more, most preferably 80% or more, still more preferably 90% or more. Herein, in order to calculate the mesomorphic phase fraction of the unstretched polypropylene film, the unstretched polypropylene film is measured by wide-angle X-ray diffractometry, and the mesomorphic phase fraction is calculated using the X-ray diffraction profile. The obtained X-ray diffraction profile is processed with peak separation software to separate the profile into profiles of a mesomorphic phase, an $\alpha$-crystal phase, and an amorphous phase, and the mesomorphic phase fraction is calculated. In the present invention, "form a mesomorphic phase" or "have a mesomorphic phase structure" means that the mesomorphic phase fraction is 20% or more. The diffraction profile derived from an $\alpha$-crystal refers to a diffraction profile observed in wide-angle X-ray diffractometry at a diffraction angle ($2\theta$) in the range of 10 to 30°, and is made up of five peaks at around 14.1°, around 16.9°, around 18.6°, around 21.6°, and around 21.9°. The diffraction profile derived from the mesomorphic phase is composed of two broad peaks around 15° and 21°. The diffraction profile derived from the amorphous phase is a broad peak at a diffraction angle around 16.2°, and can be obtained by measuring the molten polypropylene resin by wide-angle X-ray diffractometry.

As a method for bringing the film into close contact with the casting drum, any technique such as an electrostatic application method, an adhesion method based on the surface tension of water, an air knife method, a press roll method, an underwater casting method, and an air chamber method may be used. It is preferable to use an air knife method which can impart good planarity and enables control of the surface roughness. In addition, in order not to cause vibration of the film, it is preferable to appropriately adjust the position of the air knife so that air flows on the downstream side of the film formation.

From the viewpoint of increasing the crystal orientation degree, improving the mechanical characteristics, improving the electric characteristics, and increasing the glossiness of the surface, the temperature of the casting drum is more preferably 10 to 90°C, still more preferably 10 to 60°C, most preferably 10 to 30°C. Setting the temperature of the casting drum to 10 to 30°C enables to increase the mesomorphic phase fraction of the unstretched polypropylene film, so that the unstretched polypropylene film can have a mesomorphic phase structure. The mesomorphic phase is an intermediate phase between a crystal phase and an amorphous phase, and is specifically formed when the film in a molten state is solidified at a very high cooling rate. It is generally known that spherulites grow when a polypropylene is cooled and solidified into crystals. It is believed that when an unstretched polypropylene film having the spherulites is stretched, a difference in stretching stress is produced between the crystal portion and the amorphous portion inside the spherulites and between the spherulites, which produces local stretching unevenness, leading to thickness unevenness and structure unevenness. On the other hand, since the mesomorphic phase does not have the spherulite form, it is free from stretching unevenness and high in uniformity, so that the mesomorphic phase is considered to have improved withstand voltage and reliability when incorporated into a capacitor.

Then, this unstretched polypropylene film is biaxially stretched to be biaxially oriented. First, the unstretched polypropylene film is preheated by being passed through a roll maintained at 70 to 150°C, preferably 80 to 140°C, then the unstretched polypropylene film is stretched in the longitudinal direction 2 to 15 times, preferably 4.5 to 12 times, more preferably 5.5 to 10 times while being maintained at 70 to 150°C, preferably 80 to 140°C, and then cooled to room temperature. Further, when the unstretched polypropylene film has a mesomorphic phase fraction of 20% or more, the unstretched polypropylene film is preheated by being passed through a roll maintained at 80 to 130°C, preferably 90 to 120°C, then the unstretched polypropylene film is stretched in the longitudinal direction 2 to 15 times, preferably 4.5 to 12 times, more preferably 5.5 to 10 times while being maintained at 80 to 130°C, preferably 90 to 120°C, and then cooled to room temperature.

Then, the film uniaxially stretched in the longitudinal direction is led to a tenter, an end of the film is held with a clip, and the film is stretched in the width direction 7 to 15 times, more preferably 9 to 12 times, most preferably 9.2 to 11.5 times at a temperature of 140 to 170°C, preferably 145 to 160°C (width direction stretching temperature).

Herein, the area ratio is preferably 50 times or more. In the present invention, the area ratio is obtained by multiplying the stretch ratio in the longitudinal direction by the stretch ratio in the width direction. The area ratio is more preferably 55 times or more, particularly preferably 60 times or more. By setting the area ratio within the above-mentioned range, it is possible to obtain the effects of increasing the crystal orientation degree of the $\alpha$-crystal (110) plane of the polypropylene film, setting the ratio of the stress at 5% elongation in the longitudinal direction (MD-F5 value) to the stress at 5% elongation in the width direction (TD-F5 value), that is, (MD-F5 value)/(TD-F5 value), and the ratio of the maximum strength (St) to the maximum elongation (El) in the longitudinal direction, that is, (St)/(El) within preferable ranges, and improving the stress at 50% elongation in the longitudinal direction at 125°C (F50 value). Although the upper limit of the area ratio is not particularly limited, it is preferably 150 times or less from the viewpoint of film formation stability.

In the present invention, in the subsequent heat treatment and relaxation treatment steps, it is important to subject the film to heat treatment in multiple stages by heat-fixing the film at a temperature of 115°C or more and 140°C or less (first stage heat treatment temperature) while relaxing the film in the width direction by 2 to 20% with the film being tightly held in the width direction with the clip (first stage heat treatment), and then heat-fixing the film at a temperature higher than the heat fixation temperature (first stage heat treatment temperature) and lower than the stretching temperature in the width direction with the film again being tightly held in the width direction with the clip (second stage heat treatment). This heat treatment is intended for improving the thermal dimensional stability, increasing the crystal orientation degree of the $\alpha$-crystal(110) plane of the polypropylene film, setting the relationship between the stress at 5% elongation in the width direction (TD-F5 value) and the stress at 5% elongation in the longitudinal direction (MD-F5 value), that is, (MD-F5 value)/(TD-F5 value) within a preferable range, improving the stress at 50% elongation in the longitudinal direction at 125°C (F50 value), and improving the film withstand voltage.

In the relaxation treatment, the relaxation ratio is more preferably 5 to 18%, still more preferably 8 to 15% from the viewpoint of improving thermal dimensional stability. If the relaxation ratio exceeds 20%, the film may be too slack inside the tenter, wrinkles may be formed in the product, unevenness may be generated at the time of vapor deposition, and mechanical characteristics may be deteriorated, whereas if the relaxation ratio is less than 2%, sufficient thermal dimensional stability cannot be obtained, and capacity reduction or short-circuit breakdown may occur in a high-temperature environment when the film is incorporated into a capacitor.

The temperature of the first stage heat treatment is preferably 115°C or more and 140°C or less, more preferably 120°C or more and 138°C or less, still more preferably 125°C or more and 135°C or less from the viewpoint of maintaining molecular chain orientation during stretching and improving mechanical characteristics. At a heat treatment temperature lower than 115°C, capacity reduction or short-circuit breakdown may occur in capacitor characteristics in a high-temperature environment. On the other hand, if the temperature exceeds 140°C, the relaxation of molecular chain orientation formed by stretching progresses, so that the mechanical characteristics may be deteriorated.

Setting the second stage heat treatment temperature at a temperature higher than the first stage heat treatment temperature and lower than the width direction stretching temperature can relax the amorphous molecular chains with high mobility which are not sufficiently relaxed by the first stage heat treatment. As a result, the stress at 50% elongation in the longitudinal direction at 125°C (F50 value) can be improved. From this viewpoint, the second stage heat treatment temperature is preferably [(first stage heat treatment temperature) + 5°C] or more and [(width direction stretching temperature) - 5°C] or less, more preferably [(first stage heat treatment temperature) + 8°C] or more and [(width direction stretching temperature) - 8°C] or less. After being subjected to the multistage heat treatment, the film is subjected to a cooling step at 80 to 100°C while being tightly held in the width direction with the clip, led to the outside of the tenter, the clip at the end of the film is released, the film edge portion is slit in the winder step, and then the film is wound up into a film product roll.

The polypropylene film according to the first aspect is preferably subjected to surface treatment such as corona discharge treatment or plasma treatment in the air, in nitrogen, in carbon dioxide gas, or a mixed gas of these in order to improve the adhesion of the deposited metal to the surface to be subjected to vapor deposition in the processing step before or after the film is wound up.

A method for manufacturing the polypropylene film according to the first aspect of the present invention more preferably includes a step of subjecting at least one surface of the polypropylene film according to the first aspect of the present invention to plasma treatment. When the method includes the step of plasma treatment, adhesion between the deposited metal and the film is improved, and the withstand voltage and reliability of the capacitor are easily improved. Further, it is more preferable that the step of plasma treatment be performed in a nitrogen atmosphere.

Particularly important manufacturing conditions for obtaining the polypropylene film according to the first aspect of the present invention are as follows.

- The area ratio is 50 times or more (particularly preferably 60 times or more).

In addition, it is more preferable that the following conditions are satisfied.

- The first stage heat treatment temperature is 115°C or more and 140°C or less.
- The first stage heat treatment temperature is a temperature lower than the stretching temperature in the width direction.
- The second stage heat treatment temperature is a temperature higher than the first stage heat treatment temperature.
- The second stage heat treatment temperature is a temperature lower than the stretching temperature in the width direction.
- In the first stage heat treatment step, the film is subjected to relaxation treatment by 3 to 12%.

More preferably, the method satisfies at least one of the following manufacturing conditions. In this case, it is possible to improve electric characteristics at a film thickness of 3 $\mu$m or less, workability of the capacitor, withstand voltage, and reliability.

- The casting drum temperature of the molten sheet is in the range of 10 to 30°C.
- The film has a structure in which two or more layers are stacked in the film thickness direction (for example, layer A/layer B or layer A/layer B/layer A), and the percentage of thickness of the layer A is 10 to 40% of the total layer thickness.
- The layer A contains 0.04 to 0.6 parts by mass of particles having an average particle size of 0.09 to 0.3 $\mu$m, more preferably contains 1.0 part by mass or more and 4.0 parts by mass or less of polymethylpentene as a resin incompatible with the polypropylene resin.
- A surface of the film provided with the vapor-deposited layer is subjected to plasma treatment in a nitrogen atmosphere.

Then, a method for manufacturing the polypropylene film according to the second aspect will be described. First, a polypropylene resin is melt-extruded on a support to form an unstretched polypropylene film, and the unstretched polypropylene film is subjected to sequential biaxial stretching in the longitudinal and transverse directions, followed by heat treatment and relaxation treatment to manufacture a polypropylene film. Although the method will be described more specifically below, the method is not necessarily limited thereto.

First, a polypropylene resin having a meso-pentad fraction of 0.97 or more and a Tmc of 115°C or less is melt-extruded, passed through a filtration filter, and a molten sheet is extruded from a slit-shaped die at a temperature of 230 to 260°C and solidified on a casting drum controlled to a temperature of 40°C or less to obtain an unstretched polypropylene film. The temperature of the casting drum is more preferably less than 30°C, still more preferably 25°C or less. The thickness of the unstretched polypropylene film is preferably 300 $\mu$m or less, more preferably 250 $\mu$m or less, still more preferably 200 $\mu$m or less. As a method for bringing the film into close contact with the casting drum, any technique such as an electrostatic application method, an adhesion method based on the surface tension of water, an air knife method, a press roll method, and an underwater casting method may be used.

A method for manufacturing the polypropylene film according to the second aspect preferably includes a step of stretching an unstretched polypropylene film having a mesomorphic phase structure 2 times or more in at least one direction.

Hereinafter, the stretching step will be described. In order to biaxially stretch an unstretched polypropylene film to biaxially orient the film, first, the unstretched polypropylene film is preheated by being passed through a roll maintained at 20 to 140°C, then the unstretched polypropylene film is preheated by being passed through a roll maintained at 20 to 140°C, preferably 80 to 130°C, then the unstretched polypropylene film is maintained at a temperature of 80 to 130°C, preferably 90 to 125°C, more preferably 115 to 123°C, and the film is stretched in the longitudinal direction 2 times, preferably 2 to 15 times, and then cooled to room temperature. The temperature of the preheating roll is preferably lower than the stretching temperature. A more preferable stretch ratio in the longitudinal direction is 4.6 to 10 times, more preferably 5 to 9 times, most preferably 5.4 to 8 times. The stretching method and the stretch ratio are not particularly limited, and are appropriately selected according to the characteristics of the used polymer.

Then, the longitudinally uniaxially stretched film is led to a tenter, an end of the film is held with a clip, and the film is transversely stretched 2 times or more, preferably 5 to 15 times, more preferably 6 to 12 times, still more preferably 7.5 to 9 times in the width direction at a temperature of 120 to 165°C. When the stretch ratio in the width direction is less than 5 times, the mechanical characteristics in the width direction of the film may deteriorate, or the thickness unevenness may increase, so that the breakdown voltage sometimes decreases. On the other hand, when the stretch ratio in the width direction exceeds 15 times, film breakage tends to occur easily, productivity may deteriorate, the thermal shrinkage rate may increase, and the reliability may be lowered.

In the present invention, in the subsequent heat treatment and relaxation treatment steps, it is important to subject the film to heat treatment in multiple stages by heat-fixing the film in the first stage at a temperature of 115°C or more and 140°C or less while relaxing the film in the width direction by 2 to 20% with the film being tightly held in the width direction with the clip, and then heat-fixing the film in the second stage at a temperature higher than the first stage heat treatment temperature and lower than the stretching temperature in the width direction with the film being tightly held in the width direction with the clip. This heat treatment is intended for increasing the stiffness of the film, reducing the thermal shrinkage rate of the film, and improving the film withstand voltage.

The relaxation ratio in the relaxation treatment step is preferably 5 to 18%, more preferably 8 to 15% from the viewpoint of obtaining thermal dimensional stability. If the relaxation ratio exceeds 20%, the film may be too slack inside the tenter, wrinkles may be formed in the product, and unevenness may be generated at the time of vapor deposition, whereas if the relaxation ratio is less than 2%, thermal dimensional stability cannot be obtained, and capacity reduction or short-circuit breakdown may occur in a high-temperature environment when the film is incorporated into a capacitor.

From the viewpoint that the first stage heat treatment temperature can maintain the molecular chain orientation during stretching and improve mechanical characteristics, the first stage heat treatment temperature is preferably 115°C or more and 140°C or less, more preferably 120°C or more and 138°C or less, still more preferably 125°C or more and 135°C or less. At a heat treatment temperature lower than 115°C, capacity reduction or short-circuit breakdown may occur in capacitor characteristics in a high-temperature environment. On the other hand, in the case of heat treatment at a temperature exceeding 140°C, relaxation of molecular chain orientation progresses, so that the mechanical characteristics of the film may be deteriorated.

Setting the second stage heat treatment temperature at a temperature higher than the first stage heat treatment temperature and lower than the transverse stretching temperature can relax the amorphous molecular chains with high mobility which are not sufficiently relaxed by the first stage heat treatment, and reduce the thermal shrinkage rate. From this viewpoint, the second stage heat treatment temperature is preferably (first stage heat treatment temperature + 5°C or more and transverse stretching temperature - 5°C or less), more preferably (first stage heat treatment temperature + 8°C or more and transverse stretching temperature - 8°C or less).

After being subjected to the multistage heat treatment, the film is subjected to a cooling step at 80 to 100°C while being tightly held in the width direction with the clip, led to the outside of the tenter, the clip at the end of the film is released, the film edge portion is slit in the winder step, and then the film is wound up into a film product roll. A surface of the film to be subjected to vapor deposition is preferably subjected to corona discharge treatment in the air, nitrogen, carbon dioxide gas, or a mixed gas of these before the film is wound up in order to improve adhesion of the evaporated metal.

Then, a metal membrane layered film including the polypropylene film according to the first aspect of the present invention, a film capacitor including the metal membrane layered film, and methods for manufacturing them will be described.

The metal membrane layered film of the present invention includes the polypropylene film according to the first aspect of the present invention, and a metal membrane provided on at least one surface of the polypropylene film.

A method for manufacturing a metal membrane layered film of the present invention includes a metal membrane providing step of providing a metal membrane to at least one surface of a polypropylene film obtained by the manufacturing method according to the first aspect.

In the present invention, the method of the metal membrane providing step of providing a metal membrane to at least one surface of the polypropylene film to give a metal membrane layered film is not particularly limited. For example, it is preferable to employ a method of vapor-depositing aluminum or an alloy of aluminum and zinc on at least one surface of a polypropylene film to form a metal membrane that serves as an internal electrode of a film capacitor, such as an evaporated film. In this case, other metal components such as nickel, copper, gold, silver, and chromium may be deposited simultaneously with aluminum or sequentially. A protective layer may be formed using an oil or the like on the evaporated film. In the case where the surface roughness of the polypropylene film is different between the front and back surfaces, it is preferable to provide a metal membrane layered film by providing a metal membrane on the smooth front surface from the viewpoint of increasing the withstand voltage.

In the present invention, after a metal membrane is formed, the metal membrane layered film may be subjected to annealing treatment or heat treatment at a specific temperature as required. Further, at least one surface of the metal membrane layered film may be coated with polyphenylene oxide or the like for the purpose of insulation or the like.

The film capacitor of the present invention includes the metal membrane layered film of the present invention.

A method for manufacturing a film capacitor of the present invention includes using the metal membrane layered film obtained by the method for manufacturing the metal membrane layered film of the present invention.

For example, the film capacitor of the present invention can be obtained by stacking or winding the above-mentioned metal membrane layered film of the present invention by various methods. An example of a preferable manufacturing method of a wound film capacitor is as follows.

Aluminum is vapor-deposited on one surface of a polypropylene film under a reduced pressure. In the vapor deposition, aluminum is vapor-deposited in a stripe pattern having margins running in the film longitudinal direction. Then, slits are made with an edge in the center of each aluminum deposited portion and the center of each margin on the surface to prepare a tape-shaped winding reel having margins in one surface. Two tape-shaped winding reels each having margins on a left side or a right side are stacked so that the aluminum deposited portion is protruded from the margin in the width direction, and wound to give a wound body.

When both surfaces of the film is subjected to vapor deposition, aluminum is vapor-deposited in a stripe pattern having margins running in the longitudinal direction in one surface, and aluminum is vapor-deposited in a stripe pattern so that margins in the longitudinal direction are positioned at the center of the aluminum deposited portion on the back surface. Then, slits are made with an edge in the center of each margin on the front and back surfaces to prepare a tape-shaped winding reel having margins on one side in both the front and back surfaces (for example, when the front margin is present on the right side, the back margin is present on the left side) . The obtained reel and a non-deposited coupled film are stacked so that the metalized film is protruded from the coupled film in the width direction, and wound to give a wound body.

A core material is removed from the wound body produced as described above, and the wound body is pressed. The wound body is subjected to metal spraying at both end surfaces to form an external electrode, and a lead wire is welded to the metal-sprayed parts to give a wound film capacitor. The film capacitor is used in wide applications, for example, railway vehicles, automobiles (hybrid cars and electric vehicles), solar power generation and wind power generation, and general home electronics. The film capacitor of the present invention can also be suitably used in these applications. The film capacitor can also be used in various applications such as packaging films, release films, process films, sanitary articles, agricultural articles, building articles, and medical supplies.

Measurement methods of characteristic values in the present invention, and the methods for evaluating the effects are as follows.

(1) Film thickness

The thickness of arbitrary 10 points of a polypropylene film was measured using a contact type electronic micrometer (type K-312A) manufactured by ANRITSU CORPORATION in an atmosphere of 23°C and 65% RH. The average value of the thicknesses of 10 points was taken as the film thickness of the polypropylene film.

(2) Thickness unevenness of film in longitudinal direction (second aspect)

A polypropylene film was cut into a piece having a width of 10 mm, and the thickness was measured at 20 points at an interval of 50 mm in the longitudinal direction. The average value of the obtained thickness data of 20 points was obtained. In addition, the difference (absolute value) between the maximum value and the minimum value was obtained, and the absolute value of the difference between the minimum value and the maximum value was divided by the average value and multiplied by 100 to obtain the thickness unevenness of the film in the longitudinal direction. The thickness was measured using a contact type electronic micrometer (type K-312A) manufactured by ANRITSU CORPORATION in an atmosphere of 23°C and 65% RH.

(3) Crystal orientation degree of $\alpha$-crystal (110) plane of polypropylene film measured by wide-angle X-ray diffractometry (first aspect)

A polypropylene film was cut into strips each having a length of 4 cm and a width of 1 mm, and the strips were stacked so that the product would have a thickness of 1 mm to prepare a specimen. The specimen was irradiated with X-rays in a direction perpendicular to the film surface. From the half width H (°) of the orientation peak obtained by scanning the crystal peak in $2\theta$ = about 14° ($\alpha$-crystal (110) plane) in the circumferential direction, the crystal orientation degree was calculated according to the following formula.

$$\texttt{Crystal orientation degree = (180° - H)/180°}$$

The measuring apparatus and conditions are shown below.

(Measuring apparatus)

- X-ray diffraction apparatus

    Model 4036 A2 manufactured by Rigaku Denki Co., Ltd.
    X-ray source: CuK$\alpha$ ray (Ni filter was used)
    Output: 40 kV - 30 mA

- Goniometer

    Model 2155D manufactured by Rigaku Denki Co., Ltd.
    Slit: 2 mm$\varphi$-1°-1°
    Detector: Scintillation counter

- Counting recorder
  Model RAD-C manufactured by Rigaku Denki Co., Ltd.

(Measurement conditions)

• Circumferential scanning (2θ = about 14°)

Scan method: Step scan
Measurement range: 0 to 360°
Step: 0.5°
Integration time: 2 seconds

(4) Maximum strength (St) and maximum elongation (El) in longitudinal direction (first aspect)

A polypropylene film was cut in the longitudinal direction into a rectangle having a width of 10 mm and a length of 150 mm (the measured position was the position of 50 mm at the center) to prepare a sample. Then, the sample was set on a tensile tester (Tensilon UCT-100 manufactured by ORIENTEC CORPORATION) for a rectangular sample at an initial chuck distance of 20 mm, and a tensile test of the film was carried out at a tensile speed of 300 mm/min at 23°C. The maximum load until the sample was broken was read, the value obtained by dividing the maximum load by the cross sectional area (film thickness $\times$ width (10 mm)) of the specimen before the test was calculated as the stress (unit: MPa) of the maximum strength, and the breaking point corresponding to the maximum strength was taken as the maximum elongation (unit: %). Measurements were made 5 times for each sample, the average value was calculated, and the maximum strength (St) and the maximum elongation (El) were obtained.
The film thickness used in calculating the maximum strength was the value measured in the above (1).

(5) Sum of maximum strengths in longitudinal direction and width direction of film (second aspect)

A polypropylene film was cut into a rectangle having a test direction length of 50 mm and a width of 10 mm to prepare a sample. Then, the sample was set on a tensile tester (Tensilon UCT-100 manufactured by ORIENTEC CORPORATION) for a rectangular sample at an initial chuck distance of 20 mm, and a tensile test of the film was carried out at a tensile speed of 300 mm/min at 23°C. The maximum load until the sample was broken was read, and the value obtained by dividing the maximum load by the cross sectional area (film thickness $\times$ width (10 mm)) of the specimen before the test was calculated as the stress (unit: MPa) of the maximum strength. Measurements of the maximum strength were made 5 times for each sample, the average value was calculated, and the maximum strength was obtained. The sum of the maximum strength in the film longitudinal direction and the maximum strength in the film width direction was calculated.
The film thickness used in calculating the maximum strength was the value measured in the above (1).

(6) Stress at 5% elongation in film width direction (TD-F5 value) and film longitudinal direction (MD-F5 value) (first aspect)

A polypropylene film was cut in the width direction and the longitudinal direction each into a rectangle having a width of 10 mm and a length of 150 mm (the measured position was the position of 50 mm at the center) to prepare a sample. Then, the sample was set on a tensile tester (Tensilon UCT-100 manufactured by ORIENTEC CORPORATION) for a rectangular sample at an initial chuck distance of 20 mm, and a tensile test of the film was carried out at a tensile speed of 300 mm/min at 23°C. The load applied to the film when the elongation of the sample was 5% was read, and the value obtained by dividing the load by the cross sectional area (film thickness $\times$ width (10 mm)) of the specimen before the test was calculated as the stress at 5% elongation (unit: MPa). Measurements were made 5 times for each sample, the average value was calculated, and the "TD-F5 value" and the "MD-F5 value" were calculated.
The film thickness used in calculating the F5 value was the value measured in the above (1).

(7) Maximum strength of film as measured at 125°C (second aspect)

A polypropylene film was prepared, and a sample having a longitudinal direction and a width direction each as a long side direction was cut into a rectangle having a length of 50 mm and a width of 10 mm. The sample was set on a tensile tester (Tensilon UCT-100 manufactured by ORIENTEC CORPORATION) for a rectangular sample at an initial chuck distance of 20 mm, the sample with the chuck was put in an oven heated to 125°C and heated for 1 minute, and a tensile test of the film was carried out at a tensile speed of 300 mm/min. The maximum load until the sample was broken was read, and the value obtained by dividing the maximum load by the cross sectional area (film thickness $\times$ width (10 mm)) of the specimen before the test was calculated as the stress of the maximum strength. Measurements were made 5 times for each sample, and the maximum strength was evaluated by the average value of the measurements. The film thickness used in calculating the maximum strength was the value measured in the above (1).

(8) Stress at 50% elongation in longitudinal direction at 125°C (F50 value) (first aspect)

A polypropylene film was cut in the longitudinal direction into a rectangle having a width of 10 mm and a length of 150 mm (the measured position was the position of 50 mm at the center) to prepare a sample. Then, the sample was set on a tensile tester (Tensilon UCT-100 manufactured by ORIENTEC CORPORATION) for a rectangular sample at an initial chuck distance of 20 mm, the sample with the chuck was put in an oven heated to 125°C and heated for 1 minute, and a tensile test of the film was carried out at a tensile speed of 300 mm/min. The load applied to the film when the elongation of the sample was 50% was read, and the value obtained by dividing the load by the cross sectional area (film thickness x width (10 mm)) of the specimen before the test was calculated as the stress at 50% elongation (F50 value) (unit: MPa). Measurements were made 5 times for each sample, and the F50 value was evaluated by the average value of the measurements.

As the film thickness used in calculating the F50 value, the value measured in the above (1) was used.

(9) Thermal shrinkage rate after heat treatment at 120°C for 10 minutes (first aspect)

A polypropylene film was cut in the width direction and the longitudinal direction each into 5 specimens each having a width of 10 mm and a length of 50 mm (measurement direction), and each specimen was marked at a position of 5 mm from each end to mark a test length of 40 mm ($l_0$). Then, each test piece was sandwiched between paper, heated in an oven maintained at 120°C for 10 minutes in an unloaded state, and then taken out and cooled at room temperature. The dimension ($l_1$) was measured and the thermal shrinkage rate was determined by the following formula, and the average value of the thermal shrinkage rates of 5 specimens was taken as the thermal shrinkage rate.

$$\texttt{Thermal shrinkage rate} = \{(l_0 - l_1)/l_0\} \times 100 \; (\%)$$

(10) Thermal shrinkage rate after heat treatment at 125°C for 15 minutes (second aspect)

A polypropylene film was prepared, and a sample having a longitudinal direction and a width direction each as a long side direction was cut into a rectangle having a length of 50 mm and a width of 10 mm. Each specimen was marked at a position of 5 mm from each end so that the specimen had a test length of about 40 mm, and the distance between the marks was measured using a universal projector (V-16A) manufactured by Nikon Corporation as a test length ($l_0$). Then, each test piece was sandwiched between paper, heated in an oven maintained at 125°C for 15 minutes in an unloaded state, and then taken out and cooled at room temperature. The dimension ($l_1$) was measured and the thermal shrinkage rate was determined by the following formula, and the average value of the thermal shrinkage rates of 5 specimens was taken as the thermal shrinkage rate.

$$\texttt{Thermal shrinkage rate} = \{(l_0 - l_1)/l_0\} \times 100 \; (\%)$$

(11) Film breakdown voltage 1 (V/$\mu$m) at 125°C (first aspect)

A film was heated for 1 minute in an oven maintained at 125°C, and then a breakdown voltage test was carried out 30 times according to JIS C 2330 (2001) 7.4.11.2 B method (flat plate electrode method) in the atmosphere. The obtained value was divided by the thickness of the film (above-mentioned (1)) and converted into (V/$\mu$m). From the measured value (calculated value) of 30 points in total, 5 points in descending order from the maximum value and 5 points in ascending order from the minimum value were excluded, and the average value of the remaining 20 points was taken as the film breakdown voltage at 125°C.

(12) Film breakdown voltage 2 (V/$\mu$m) at 125°C (second aspect)

A film was heated for 1 minute in an oven maintained at 125°C, and then the breakdown voltage was measured according to JIS C 2330 (2001) 7.4.11.2 B method (flat plate electrode method) in the atmosphere. As for the lower electrode, the one prepared by placing, on a metal plate described in JIS C 2330 (2001) 7.4.11.2 B method, "Conductive rubber E-100 <65>" manufactured by TOGAWA RUBBER CO., LTD. having the same size was used as the electrode. A breakdown voltage test was carried out 30 times. The obtained value was divided by the thickness of the film (above-mentioned (1)) and converted into (V/μm). From the measured value (calculated value) of 30 points in total, 5 points in descending order from the maximum value and 5 points in ascending order from the minimum value were excluded, and the average value of the remaining 20 points was taken as the film breakdown voltage at 125°C.

(13) Total haze of film (second aspect)

Using a haze meter (NDH-5000 manufactured by NIPPON DENSHOKU INDUSTRIES CO., LTD.), the haze value (%) of the polypropylene film at 23°C was measured 3 times according to JIS-K7136 (2000), and the average value was used.

(14) Meso-pentad fraction

A polypropylene film was extracted with n-heptane at 60°C for 2 hours to remove impurities and additives in polypropylene, followed by drying under reduced pressure at 130°C for 2 hours or more, and the resultant was used as a sample. The sample was dissolved in a solvent, and the meso-pentad fraction (mmmm) was determined (unit: %) by $^{13}$C-NMR under the following conditions.

Measurement conditions

- Apparatus: DRX-500 manufactured by Bruker Corporation
- Measurement nucleus: $^{13}$C nucleus (resonance frequency: 125.8 MHz)
- Measurement concentration: 10% by mass
- Solvent: benzene/deuterated ortho-dichlorobenzene = 1 : 3 mixed solution (volume ratio)
- Measurement temperature: 130°C
- Spin rotation number: 12 Hz
- NMR specimen tube: 5 mm tube
- Pulse width: 45° (4.5 μs)
- Pulse repetition period: 10 seconds
- Data point: 64 K
- Number of integrations: 10,000 times
- Measurement mode: complete decoupling

Analysis conditions

Fourier transformation was performed with an LB (line broadening factor) of 1, and the mmmm peak was set to 21.86 ppm. Using WINFIT software (manufactured by Bruker Corporation), peak splitting was carried out. The peak splitting was carried out from a peak on high magnetic field in the following manner, and automatic fitting of the software was carried out to perform the optimization of peak splitting. The total of peak fractions of mmmm was taken as the meso-pentad fraction (mmmm).

    (1) mrrm
    (2) (3) rrrm (split as two peaks)
    (4) rrrr
    (5) mrmr
    (6) mrmm + rmrr
    (7) mmrr
    (8) rmmr
    (9) mmmr
    (10) mmmm

The same measurement was performed 5 times on the same sample, and the average value of the obtained meso-pentad fractions was taken as the meso-pentad fraction of the sample.

(15) Melting point of polypropylene resin

Using a differential scanning calorimeter (EXSTAR DSC 6220 manufactured by Seiko Instruments Inc.), 3 mg of polypropylene chips were heated from 30°C to 260°C at a rate of 40°C/min in a nitrogen atmosphere. Subsequently, the chips were held at 260°C for 5 minutes, and then cooled down to 30°C at 40°C/min. Further, after the chips were held at 30°C for 5 minutes, the temperature was raised from 30°C to 260°C at a rate of 40°C/min. The peak temperature of the endothermic curve obtained during the temperature rise was taken as the melting point of the polypropylene resin.

(16) Crystallization temperature (Tmc) (second aspect)

Using a differential scanning calorimeter (EXSTAR DSC 6220 manufactured by Seiko Instruments Inc.), 3 mg of a polypropylene resin was heated from 30°C to 260°C at a rate of 40°C/min in a nitrogen atmosphere. Subsequently, the resin was held at 260°C for 5 minutes, and then cooled down to 30°C at 40°C/min. The peak temperature of the exothermic curve obtained during the cooling was taken as the crystallization temperature.

(17) Three-dimensional center plane average roughness SRa and ten-point average roughness SRz (first aspect)

The three-dimensional surface roughness was measured using surf-corder ET-4000A manufactured by Kosaka Laboratory Ltd. under the following conditions. The sample set was set on the sample table so that the X direction of the visual field measurement was the width direction of the polypropylene film and the upper surface was the measurement surface. The surface roughness was measured 10 times at different positions under the following conditions. The average value of three-dimensional center plane surface roughnesses of the samples was calculated as SRa, and the average value of ten-point average roughnesses was calculated as SRz. The measurement was made at both the front and back surfaces of the film, and the surface having a smaller SRa was used as the evaluation surface of the three-dimensional center plane average roughness SRa and the ten-point average roughness SRz of the polypropylene film.
Apparatus: "Surf-corder ET-4000A" manufactured by Kosaka Laboratory Ltd.
Analysis software: i-Face model TDA31
Stylus tip radius: 0.5 $\mu$m
Measurement visual field:

X direction: 1000 $\mu$m pitch: 5 $\mu$m
Y direction: 250 $\mu$m pitch: 10 $\mu$m

Needle pressure: 50 $\mu$N
Measurement speed: 0.1 mm/s
Cut-off value: Low region 0.2 mm, high region-none
Leveling: All regions
Filter: Gaussian filter (space type)
Magnification: 20,000 times

(18) Glossiness (first aspect)

Using a digital variable angle gloss meter UGV-5D manufactured by Suga Test Instruments Co., Ltd. in accordance with JIS K-7105 (1981), the surface of a film on the side in contact with the casting drum was measured under conditions of an incident angle of 60° and a light receiving angle of 60°. The average of data at 5 points was taken as the glossiness (%) .

(19) Coefficient of static friction ($\mu$s) (first aspect)

The coefficient of static friction was measured at 25°C and 65% RH according to JIS K 7125 (1999) using a slip tester manufactured by Toyo Seiki Seisaku-sho, Ltd. The measurement was performed in such a manner that the longitudinal directions of the films and the different surfaces of the films overlapped with each other, that is, so that the surface of one film and the back surface of the other film were in contact with each other. The same measurement was performed 5 times per sample, and the average value of the obtained values was calculated and taken as the coefficient of static friction ($\mu$s) of the sample.

(20) Nitrogen element composition amount at film surface (first aspect)

A surface of a film subjected to corona discharge treatment or plasma treatment (if it is unknown which surface of the film was treated, of both the surfaces of the film, the film surface having higher wet tension) was subjected to X-ray photoelectron spectroscopy (XPS) using the following apparatus. The film surface was irradiated with soft X-rays in ultra-high vacuum, and photoelectrons emitted from the film surface were detected with an analyzer. From the binding energy value of bound electrons in the film surface, information on each element, such as the carbon element, oxygen element, and nitrogen element on the surface was obtained, and the area ratio of peak intensity of each element was quantified by a data processing device. The nitrogen element composition amount (atomic%) in the total amount of the oxygen element, carbon element, and nitrogen element was determined.

Apparatus: QuanteraSXM manufactured by PHI
Excited X-ray: Monochromatic Al K $\alpha_{1,2}$ ray (1486.6 eV)
X-ray diameter: 200 $\mu$m
Photoelectron escape angle (inclination of detector with respect to specimen surface): 45°
Data processing: Smoothing of narrow scan 9-point smoothing

The abscissa correction was made by setting the C1s main peak to 284.6 eV.

(21) Wet tension

The surface of the film subjected to the surface treatment was measured in accordance with JIS K 6768 (1999) (unit: mN/m).

(22) Mesomorphic phase fraction of unstretched polypropylene film (wide-angle X-ray diffractometry)

An unstretched polypropylene film after the casting step was cut into a piece of 10 mm in the width direction and 20 mm in the longitudinal direction. Using this specimen, the measurement was carried out at room temperature in the diffraction angle ($2\theta$) range of 5 to 30°. Detailed measurement conditions are as follows.

- Apparatus: NANO-Viewer (manufactured by Rigaku Corporation)
- Wavelength: 0.15418 nm
- X-ray incident direction: Through direction (incident perpendicularly to film surface)
- Measurement time: 300 seconds

Then, the obtained diffraction profile was processed with peak separation software to separate the profile into three components of profiles of a mesomorphic phase, an $\alpha$-crystal phase, and an amorphous phase. As analysis software, IGOR Pro (Ver. 6) software manufactured by WaveMetrics, Inc. was used. In performing the analysis, the following assumptions were made.

- Peak shape function: Lorentz function
- Peak position:

    Amorphous phase = 16.2°, mesomorphic phase = 15.0°, 21.0°
    $\alpha$-crystal phase = 14.1°, 16.9°, 18.6°, 21.6°, 21.9°

- Peak half width:
    Amorphous phase = 8.0, mesomorphic phase (15.0°) = 3.5, mesomorphic phase (21.0°) = 2.7

The half widths of amorphous and mesomorphic phases are fixed to the above-mentioned values, but the half width of the $\alpha$-crystal phase is not fixed.
With respect to the obtained peak separation result, the areas of the diffraction profile having peaks at 15° and 21° derived from the mesomorphic phase ($m_{15}$ and $m_{21}$) were calculated, and the areas of the diffraction profile having peaks at 14.1°, 16.9°, 18.6°, 21.6°, and 21.9° derived from the $\alpha$-crystal ($\alpha_{14.1}$, $\alpha_{16.9}$, $\alpha_{18.6}$, $\alpha_{21.6}$, and $\alpha_{21.9}$) were calculated. The areas were calculated according to the following formula to determine the proportion of the area of the profile derived from the mesomorphic phase as the mesomorphic phase fraction.

$$\text{(Formula) mesomorphic phase fraction (\%)} = 100 \times (m_{15} + m_{21}) / (m_{15} + m_{21} + \alpha_{14.1} + \alpha_{16.9} + \alpha_{18.6} + \alpha_{21.6} + \alpha_{21.9})$$

(23) Volume resistivity at 110°C (first aspect)

According to JIS K-6911 (2006), as shown in Fig. 1, the elements were connected, and the test piece was held at 110°C for 30 minutes and then charged at a voltage of 100 V for 1 minute to measure the volume resistance $R_v$ ($\Omega$). From the obtained volume resistance, the volume resistivity $\rho_v$ [$\Omega \cdot cm$] was calculated using the formula (1). In the formula, d is the diameter [cm] of the main electrode, and t is the thickness [cm] of the film specimen. The thickness of the film specimen was measured at arbitrary 5 positions in the measurement specimen with a laser hollow gauge manufactured by Mitutoyo Corporation, and the arithmetic mean value thereof was taken as the specimen thickness. d and t were calculated using measured values at room temperature.

Measuring apparatus:

ULTRA HIGH RESISTANCE METER R 8340A (manufactured by ADC CORPORATION),
TEST FIXTURE TR43C (manufactured by ADVANTEST)

Film specimen piece dimension: 40 mm $\times$ 40 mm
Electrode shape:

Main electrode: $\varphi$ 10 mm
Annular electrode: internal diameter $\varphi$ 13 mm, outer diameter $\varphi$ 26 mm
Counter electrode: $\varphi$ 28 mm

Material of electrode: Both of the main electrode and the counter electrode were made from an electrically conductive paste
Annular electrode; metal electrode (gold plated product)
Applied voltage: 100 V/1 minute value
Pretreatment: C-90 h/22 $\pm$ 1°C/60 $\pm$ 5% RH
Test temperature: Room temperature 110°C

[Expression 1]

$$\text{Volume resistivity } \rho_v = \frac{\pi \, d^2}{4 \, t} \times R_v \qquad \cdots (1)$$

(24) Evaluation of vapor-deposited capacitor characteristics (withstand voltage and reliability at 110°C)

On the surface of a film subjected to corona discharge treatment or plasma treatment obtained in each of the examples and comparative examples described later (if it is unknown which surface of the film was treated, of both the surfaces of the film, the film surface having higher wet tension), an evaporated pattern having a so-called T-shaped margin pattern, which had a film resistance of 8 $\Omega$/sq and included a margin in a direction perpendicular to the longitudinal direction, was made by a vacuum vapor deposition machine manufactured by ULVAC to give an evaporated reel having a width of 50 mm.
Then, a capacitor device was wound on the reel using a device winding machine (KAW-4NHB) manufactured by KAIDO MFG. CO., LTD., the resultant was subjected to metal spraying and then to heat treatment at a temperature of 120°C for 10 hours under a reduced pressure, and a lead wire was attached to the resultant to give a finished capacitor device.
Using 10 capacitor devices thus obtained, a voltage of 300 V DC was applied to the capacitor device at a high temperature of 110°C, and after 10 minutes at that voltage, the applied voltage was gradually raised stepwise at 50 V DC/1 minute. This was repeated to carry out a so-called step-up test.

<Device workability>

The device workability was judged based on the following criteria. A capacitor device was prepared in the same manner as described above, and the shape of the device was visually confirmed.

A: There is no deviation or deformation of the film of the capacitor device, and there is no problem at all in the subsequent steps

B: Although there is some deviation and/or deformation of the film of the capacitor device, there is no problem in the subsequent steps

C: The deviation and/or deformation of the film of the capacitor device is large, and there are problems in the subsequent steps

Devices judged as A or B are usable. Devices judged as C are difficult to put to practical use.

<Withstand voltage>

The change in electrostatic capacitance in this test was measured and plotted on the graph, and the voltage at which the capacitance reached 70% of the initial value was divided by the thickness of the film (the above-mentioned (1)) to give a withstand voltage evaluation, and evaluated as follows.

S: 420 V or more
A: 400 V/$\mu$m or more and less than 420 V/$\mu$m
B: 380 V/$\mu$m or more and less than 400 V/$\mu$m
C: 360 V/$\mu$m or more and less than 380 V/$\mu$m
D: less than 360 V/$\mu$m

Devices judged as S, A, or B are usable. Devices judged as C and D are inferior in practical performance.

<Reliability>

The voltage was raised until the electrostatic capacitance decreased to 10% or less relative to the initial value, then the capacitor device was disassembled, the state of breakage was examined, and the reliability was evaluated as follows.

A: There is no change in the device shape, and no penetrating breakage is observed.

B: There is no change in the device shape, and penetrating breakage through not more than 10 film layers is observed.

C: Changes in the device shape are observed, or penetrating breakage through more than 10 layers is observed.

D: The device shape is broken.

Devices judged as A are usable without problems, and devices judged as B are usable depending on conditions. Devices judged as C and D are inferior in practical performance.

EXAMPLES

Hereinafter, the effects of the present invention will be further described by way of examples. Examples 1 to 9 and Comparative Examples 1 to 5 relate to the first aspect of the present invention.

(Example 1)

To a polypropylene resin manufactured by Prime Polymer Co., Ltd. having a meso-pentad fraction of 0.983, a melting point of 167°C, a melt flow rate (MFR) of 2.6 g/10 min, and a cold xylene soluble component (CXS) of 1.9% by mass, 1.0% by mass of a branched-chain polypropylene resin (high melt strength polypropylene Profax PF-814) manufactured by Basell was blended, and the blend was supplied to an extruder at a temperature of 260°C, and melt-extruded into a sheet from a T-shaped slit-die at a resin temperature of 260°C. The molten sheet was brought into close contact with a casting drum maintained at 94°C using an air knife, and cooled and solidified to give an unstretched polypropylene film. Subsequently, the unstretched polypropylene film was gradually preheated to 145°C by a plurality of roll groups, passed between rolls having a circumferential speed difference while being maintained at a temperature of 148°C, and stretched 5.8 times in the longitudinal direction. Subsequently, the film was led to a tenter, stretched 10.5 times in the width direction at a temperature of 158°C, then subjected to heat treatment at 140°C while being relaxed by 10% in the width direction as the first stage heat treatment and relaxation treatment, and further subjected to heat treatment at 155°C while being held with a clip in the width direction as the second stage heat treatment. Then, the film was subjected to a cooling step at 100°C and led to the outside of the tenter, the clip at the end of the film was released, then a film surface (surface of the film on the side in contact with the casting drum) was subjected to corona discharge treatment in the atmosphere at a treatment intensity of 25 W·min/m², and a film having a film thickness of 2.3 µm was wound up into a film roll. Characteristics of the polypropylene film of this example and capacitor characteristics are as shown in Table 2. The film was excellent in capacitor device workability, and the reliability and withstand voltage as a capacitor were at a level with no problem in practical use.

(Examples 2 and 3)

A polypropylene film having a thickness of 2.2 µm in Example 2, and a polypropylene film having a thickness of 2.0 µm in Example 3 were obtained in the same manner as in Example 1, except that the temperature of the casting drum for cooling the melt-extruded sheet, the stretch ratios and the transverse stretching temperature in the biaxial stretching, and the heat treatment conditions after the biaxial stretching were the conditions in Table 1. Characteristics of the polypropylene film of Example 2 and capacitor characteristics are as shown in Table 2. The film was excellent in capacitor device workability, and was very good in withstand voltage as a capacitor, and the reliability was at a level with no problem in practical use. Characteristics of the polypropylene film of Example 3 and capacitor characteristics are as shown in Table 2. The film was slightly poor in capacitor device workability but was at a level with no problem in practical use, and was very good in withstand voltage as a capacitor, and the reliability was at a level with no problem in practical use.

(Example 4)

As a polypropylene resin for the layer A corresponding to the surface layer in the A/B/A three-layer composite extrusion, to 100 parts by mass of a polypropylene resin manufactured by Prime Polymer Co., Ltd. having a meso-pentad fraction of 0.98, a melting point of 167°C, a melt flow rate (MFR) of 2.6 g/10 min, and a cold xylene soluble component (CXS) of 1.9% by mass, 0.5 parts by mass of "silica particles having an average particle size of 0.1 µm whose surface is subjected to silane coupling treatment: SANSIL SS-01 manufactured by Tokuyama Corporation" was kneaded and extruded by an extruder set at 240°C, and the strands were cooled with water and made into chips to give a polypropylene resin raw material (A1). Subsequently, the polypropylene resin raw material (A1) was supplied to a single-screw melt extruder for the layer A, and as a polypropylene resin for the layer B corresponding to the base layer, 100 parts by mass of a polypropylene resin manufactured by Prime Polymer Co., Ltd. having a meso-pentad fraction of 0.983, a melting point of 167°C, and a melt flow rate (MFR) of 2.6 g/10 min was supplied to a single-screw melt extruder for the layer B, melt-extruded at 260°C, and the extrusion amount was adjusted using a feed block so that the layer thickness ratio was 1/8/1 in the three-layer stacking of A/B/A (the percentage of the surface layer, that is, the layer A in the whole film thickness was 20%). The molten stacked polymer was discharged from a T-die at a resin temperature of 260°C, and the molten sheet was brought into close contact with a casting drum maintained at 20°C using an air knife, and cooled and solidified to give an unstretched polypropylene film.

Subsequently, the unstretched polypropylene film was gradually preheated to 125°C by a plurality of roll groups, passed between rolls having a circumferential speed difference while being maintained at a temperature of 128°C, and stretched 6.0 times in the longitudinal direction. Subsequently, the film was led to a tenter, stretched 10.5 times in the width direction at a temperature of 158°C, then subjected to heat treatment at 135°C while being relaxed by 10% in the width direction as the first stage heat treatment and relaxation treatment, and further subjected to heat treatment at 145°C while being held with a clip in the width direction as the second stage heat treatment. Then, the film was subjected to a cooling step at 100°C and led to the outside of the tenter, the clip at the end of the film was released, then a film surface (surface of the film on the side in contact with the casting drum) was subjected to corona discharge treatment in the atmosphere at a treatment intensity of 25 W·min/m², and a film having a film thickness of 2.2 µm was wound up into a film roll. Characteristics of the polypropylene film of this example and capacitor characteristics are as shown in Table 2. The film was excellent in capacitor device workability, and the reliability and withstand voltage as a capacitor were at a very good level.

(Example 5)

As a polypropylene resin for the layer A corresponding to the surface layer in the A/B/A three-layer composite extrusion, 100 parts by mass of a polypropylene resin manufactured by Prime Polymer Co., Ltd. having a meso-pentad fraction of 0.98, a melting point of 167°C, a melt flow rate (MFR) of 2.6 g/10 min, and a cold xylene soluble component (CXS) of 1.9% by mass was blended with 5 parts by mass of a polymethylpentene resin "TPX" (registered trademark) MX002 (melting point: 224°C) manufactured by Mitsui Chemicals, Inc. The blend was kneaded and extruded by a twin-screw extruder set at 260°C, and the strands were cooled with water and made into chips to give a polypropylene resin raw material (A2). The polypropylene resin raw material (A2) was supplied to a single-screw melt extruder for the layer A, the extrusion amount was adjusted using a feed block so that the layer thickness ratio would be 1/8/1 in the three-layer stacking of A/B/A (the percentage of the surface layer, that is, the layer A in the whole film thickness was 20%), the molten stacked polymer was discharged from a T-die at a resin temperature of 260°C, and the molten sheet was brought into close contact with a casting drum maintained at 20°C using an air knife, and cooled and solidified to give an unstretched polypropylene film. Subsequently, the unstretched polypropylene film was gradually preheated to 115°C by a plurality of roll groups, passed between rolls having a circumferential speed difference while being maintained at a temperature of 118°C, and stretched 6.0 times in the longitudinal direction. Then, a film having a thickness of 2.3 $\mu$m was obtained in the same manner as in Example 4 except that the film was formed under the conditions shown in Table 1. Characteristics of the polypropylene film of this example and capacitor characteristics are as shown in Table 2. The film was excellent in capacitor device workability, and the reliability and withstand voltage as a capacitor were at a very good level.

(Example 6)

Biaxial stretching, heat treatment, and relaxation treatment were carried out in the same manner as in Example 5 under the conditions shown in Table 1, and the film was wound up into a film roll having a film thickness of 2.3 $\mu$m without the corona discharge treatment of the film surface. Then, the film surface (on the side in contact with the casting drum) of the film roll was subjected to atmospheric pressure plasma treatment in a nitrogen gas atmosphere by a roll-to-roll method using an atmospheric pressure plasma surface treatment apparatus at a treatment intensity of 100 W·min/m$^2$. The oxygen concentration in the atmosphere in the plasma treatment was 40 ppm. Characteristics of the polypropylene film of this example and capacitor characteristics are as shown in Table 2. The film was excellent in capacitor device workability, very good in the reliability as a capacitor, and the withstand voltage was at a very good level.

(Example 7)

Biaxial stretching, heat treatment, and relaxation treatment were carried out in the same manner as in Example 1 under the conditions shown in Table 1, and the film was wound up into a film roll having a film thickness of 2.3 $\mu$m without the corona discharge treatment of the film surface. Then, the film surface (on the side in contact with the casting drum) of the film roll was subjected to atmospheric pressure plasma treatment in a nitrogen gas atmosphere by a roll-to-roll method using an atmospheric pressure plasma surface treatment apparatus at a treatment intensity of 50 W·min/m$^2$. The oxygen concentration in the atmosphere in the plasma treatment was 40 ppm. Characteristics of the polypropylene film of this example and capacitor characteristics are as shown in Table 2. The film was excellent in capacitor device workability, very good in the withstand voltage as a capacitor, and the reliability was at a level with no problem in practical use.

(Example 8)

Biaxial stretching, heat treatment, and relaxation treatment were carried out in the same manner as in Example 1 under the conditions shown in Table 3, and the film was wound up into a film roll having a film thickness of 2.3 $\mu$m without the corona discharge treatment of the film surface. Then, the film surface (on the side in contact with the casting drum) of the film roll was subjected to atmospheric pressure plasma treatment in a nitrogen gas atmosphere by a roll-to-roll method using an atmospheric pressure plasma surface treatment apparatus at a treatment intensity of 110 W·min/m$^2$. The oxygen concentration in the atmosphere in the plasma treatment was 40 ppm. Characteristics of the polypropylene film of this example and capacitor characteristics are as shown in Table 4. The film was excellent in capacitor device workability, and the reliability and withstand voltage as a capacitor were at a very good level.

(Example 9)

A polypropylene resin manufactured by Prime Polymer Co., Ltd. having a meso-pentad fraction of 0.983, a melting point of 167°C, a melt flow rate (MFR) of 2.6 g/10 min, and a cold xylene soluble component (CXS) of 1.9% by mass was supplied to an extruder at a temperature of 260°C, and melt-extruded into a sheet from a T-shaped slit-die at a resin temperature of 260°C. The molten sheet was brought into close contact with a casting drum maintained at 30°C using an air knife, and cooled and solidified to give an unstretched polypropylene film. Subsequently, the unstretched polypropylene film was gradually preheated to 122°C by a plurality of roll groups, passed between rolls having a circumferential speed difference while being maintained at a temperature of 125°C, and stretched 5.9 times in the longitudinal direction. Subsequently, the film was led to a tenter, stretched 11.0 times in the width direction at a temperature of 161°C, then subjected to heat treatment at 130°C while being relaxed by 10% in the width direction as the first stage heat treatment and relaxation treatment, and further subjected to heat treatment at 140°C while being held with a clip in the width direction as the second stage heat treatment. Then, the film was subjected to a cooling step at 100°C and led to the outside of the tenter, the clip at the end of the film was released, then a film surface (surface of the film on the side in contact with the casting drum) was subjected to corona discharge treatment in the atmosphere at a treatment intensity of 25 W·min/m$^2$, and a film having a film thickness of 5.8 μm was wound up into a film roll. Characteristics of the polypropylene film of this example and capacitor characteristics are as shown in Table 4. The film was excellent in capacitor device workability, very good in the withstand voltage as a capacitor, and the reliability was at a level with no problem in practical use.

(Comparative Example 1)

A polypropylene film having a thickness of 2.2 μm was obtained in the same manner as in Example 1, except that the temperature of the casting drum for cooling the melt-extruded sheet, the stretch ratios and the transverse stretching temperature in the biaxial stretching, and the heat treatment conditions after the biaxial stretching were the conditions in Table 3. Characteristics of the polypropylene film of this comparative example and capacitor characteristics are as shown in Table 4. The film was excellent in capacitor device workability, but was very low in withstand voltage as a capacitor, and the reliability evaluation of the film was at a level with problems such as deformation of the device shape.

(Comparative Example 2)

A polypropylene film having a thickness of 2.3 μm was obtained in the same manner as in Example 1, except that a polypropylene resin manufactured by Prime Polymer Co., Ltd. having a meso-pentad fraction of 0.941 was used, the temperature of the casting drum for cooling the melt-extruded sheet, the stretch ratios and the transverse stretching temperature in the biaxial stretching were changed to the conditions in Table 3, and no heat treatment was carried out after the biaxial stretching. Characteristics of the polypropylene film of this comparative example and capacitor characteristics are as shown in Table 4. The film was excellent in capacitor device workability, but was low in withstand voltage as a capacitor, and the reliability evaluation of the film was at a level with problems such as breakage of the device.

(Comparative Example 3)

As a polypropylene resin for the layer A corresponding to the surface layer in the A/B/A three-layer composite extrusion, 90 parts by mass of a polypropylene resin manufactured by Prime Polymer Co., Ltd. having a meso-pentad fraction of 0.972, a melting point of 167°C, a melt flow rate (MFR) of 3.0 g/10 min, and a cold xylene soluble component (CXS) of 5% by mass was blended with 10 parts by mass of a polymethylpentene resin "TPX" (registered trademark) MX002 (melting point: 224°C) manufactured by Mitsui Chemicals, Inc. The blend was kneaded and extruded by a twin-screw extruder set at 260°C, and the strands were cooled with water and made into chips to give a polypropylene resin raw material (A3). The polypropylene resin raw material (A3) was supplied to a single-screw melt extruder for the layer A, the extrusion amount was adjusted using a feed block so that the layer thickness ratio would be 1/8/1 in the three-layer stacking of A/B/A (the percentage of the surface layer, that is, the layer A in the whole film thickness was 20%), the molten stacked polymer was discharged from a T-die at a resin temperature of 260°C, and the molten sheet was brought into close contact with a casting drum maintained at 88°C using an air knife, and cooled and solidified to give an unstretched polypropylene film. Subsequently, the unstretched polypropylene film was gradually preheated to 145°C by a plurality of roll groups, passed between rolls having a circumferential speed difference while being maintained at a temperature of 148°C, and stretched 5.6 times in the longitudinal direction. Subsequently, the film was led to a tenter, stretched 10.5 times in the width direction at a temperature of 163°C, then subjected to heat treatment at 170°C while being relaxed by 10% in the width direction as the first stage heat treatment and relaxation treatment, and further subjected to heat treatment at 155°C while being held with a clip in the width direction as the second stage heat treatment. Then, the film was subjected to a cooling step at 100°C and led to the outside of the tenter, the clip at the end of the film was released, then a film surface (surface of the film on the side in contact with the casting drum) was subjected to corona discharge treatment in the atmosphere at a treatment intensity of 25 W·min/m$^2$, and a film having a film thickness of 2.2 μm was wound up into a film roll. Characteristics of the polypropylene film of this comparative example and capacitor characteristics are as shown in Table 4. The film was excellent in capacitor device workability, but was low in withstand voltage as a capacitor, and the reliability evaluation of the film was at a level with problems such as deformation of the device shape.

(Comparative Example 4)

A polypropylene film having a thickness of 2.0 $\mu$m was obtained in the same manner as in Example 3, except that the stretch ratios and the transverse stretching temperature in the biaxial stretching were the conditions in Table 3, and no heat treatment or relaxation treatment was carried out after the biaxial stretching. Characteristics of the polypropylene film of this comparative example and capacitor characteristics are as shown in Table 4. The film suffered from friction or deformation at the time of capacitor device working, low in withstand voltage as a capacitor, and the reliability evaluation of the film was at a level with problems such as breakage of the device.

(Comparative Example 5)

A polypropylene film having a thickness of 6.0 $\mu$m was obtained in the same manner as in Example 9, except that a polypropylene resin manufactured by Prime Polymer Co., Ltd. having a meso-pentad fraction of 0.972, a melting point of 167°C, a melt flow rate (MFR) of 3.0 g/10 min, and a cold xylene soluble component (CXS) of 5% by mass was used, and the temperature of the casting drum for cooling the melt-extruded sheet, the stretch ratios and the transverse stretching temperature in the biaxial stretching, and the heat treatment conditions after the biaxial stretching were the conditions in Table 3. Characteristics of the polypropylene film of this comparative example and capacitor characteristics are as shown in Table 4. The film was excellent in capacitor device workability, but was low in withstand voltage as a capacitor, and the reliability evaluation of the film was at a level with problems such as deformation of the device shape.

The following Examples 10 to 13 and Comparative Examples 6 to 8 relate to the second aspect identified above; they do not illustrate the invention as claimed in the accompanying claims.

(Example 10)

Polypropylene resin chips shown in Table 5, which were manufactured by Prime Polymer Co., Ltd., had a meso-pentad fraction of 0.983, a melting point of 167°C, a Tmc of 111°C, and a melt flow rate (MFR) of 2.6 g/10 min, and were polymerized using a Ziegler-Natta catalyst, were supplied to an extruder set at a temperature of 240°C, and melt-extruded into a sheet from a T-shaped slit die (lip temperature: 260°C) . The molten sheet was brought into close contact with a casting drum maintained at 20°C by electrostatic application, and cooled and solidified to give an unstretched polypropylene film. Subsequently, the unstretched polypropylene film was gradually preheated to 120°C by a plurality of roll groups, passed between rolls having a circumferential speed difference while being maintained at a temperature of 120°C, and stretched 5.8 times in the longitudinal direction. Subsequently, the film was led to a tenter, stretched 8.6 times in the width direction at a temperature of 160°C, then subjected to heat treatment at 130°C while being relaxed by 10% in the width direction as the first stage heat treatment and relaxation treatment, and further subjected to heat treatment at 140°C while being held with a clip in the width direction as the second stage heat treatment. Then, the film was subjected to a cooling step at 100°C and led to the outside of the tenter, the clip at the end of the film was released, then a film surface (surface of the film on the side in contact with the casting drum) was subjected to corona discharge treatment in the atmosphere at a treatment intensity of 25 W·min/m$^2$, and a film having a film thickness of 5.4 $\mu$m was wound up into a film roll. Characteristics of the polypropylene film of this example and capacitor characteristics are as shown in Table 6. The reliability of the film as a capacitor was at a very good level.

(Example 11)

Polypropylene resin chips shown in Table 5, which were manufactured by Prime Polymer Co., Ltd., had a meso-pentad fraction of 0.983, a melting point of 167°C, a Tmc of 111°C, and a melt flow rate (MFR) of 2.6 g/10 min, and were used in Example 10, were supplied to an extruder set at a temperature of 240°C, and melt-extruded into a sheet from a T-shaped slit die (lip temperature: 260°C) . The molten sheet was brought into close contact with a casting drum maintained at 25°C by electrostatic application, and cooled and solidified to give an unstretched polypropylene film. Subsequently, the unstretched polypropylene film was gradually preheated to 118°C by a plurality of roll groups, passed between rolls having a circumferential speed difference while being maintained at a temperature of 118°C, and stretched 5.0 times in the longitudinal direction. Subsequently, the film was led to a tenter, stretched 8.5 times in the width direction at a temperature of 160°C, then subjected to heat treatment at 130°C while being relaxed by 7% in the width direction as the first stage heat treatment and relaxation treatment, and further subjected to heat treatment at 140°C while being held with a clip in the width direction as the second stage heat treatment. Then, the film was subjected to a cooling step at 100°C and led to the outside of the tenter, the clip at the end of the film was released, then a film surface (surface of the film on the side in contact with the casting drum) was subjected to corona discharge treatment in the atmosphere at a treatment intensity of 25 W·min/m$^2$, and a film having a film thickness of 5.2 $\mu$m was wound up into a film roll. Characteristics of the polypropylene film of this example and capacitor characteristics are as shown in Table 2. The reliability of the film as a capacitor was at a very good level.

(Example 12)

Polypropylene resin chips shown in Table 5, which were manufactured by Prime Polymer Co., Ltd., had a meso-pentad fraction of 0.976, a melting point of 164°C, a Tmc of 113°C, and a melt flow rate (MFR) of 3.0 g/10 min, and were polymerized using a Ziegler-Natta catalyst, were supplied to an extruder set at a temperature of 240°C, and melt-extruded into a sheet from a T-shaped slit die (lip temperature: 262°C) . The molten sheet was brought into close contact with a casting drum maintained at 20°C by electrostatic application, and cooled and solidified to give an unstretched polypropylene film. Subsequently, the unstretched polypropylene film was gradually preheated to 120°C by a plurality of roll groups, passed between rolls having a circumferential speed difference while being maintained at a temperature of 120°C, and stretched 5.6 times in the longitudinal direction. Subsequently, the film was led to a tenter, stretched 8.7 times in the width direction at a temperature of 160°C, then subjected to heat treatment at 133°C while being relaxed by 10% in the width direction as the first stage heat treatment and relaxation treatment, and further subjected to heat treatment at 145°C while being held with a clip in the width direction as the second stage heat treatment. Then, the film was subjected to a cooling step at 100°C and led to the outside of the tenter, the clip at the end of the film was released, then a film surface (surface of the film on the side in contact with the casting drum) was subjected to corona discharge treatment in the atmosphere at a treatment intensity of 25 W·min/m$^2$ , and a film having a film thickness of 5.3 $\mu$m was wound up into a film roll. Characteristics of the polypropylene film of this example and capacitor characteristics are as shown in Table 6. The reliability of the film as a capacitor was at a level with no problem in practical use.

(Example 13)

Polypropylene resin chips shown in Table 5, which were manufactured by Prime Polymer Co., Ltd., had a meso-pentad fraction of 0.983, a melting point of 167°C, a Tmc of 111°C, and a melt flow rate (MFR) of 2.6 g/10 min, and were used in Example 10, were supplied to an extruder set at a temperature of 240°C, and melt-extruded into a sheet from a T-shaped slit die (lip temperature: 258°C) . The molten sheet was brought into close contact with a casting drum maintained at 18°C by electrostatic application, and cooled and solidified to give an unstretched polypropylene film. Subsequently, the unstretched polypropylene film was gradually preheated to 122°C by a plurality of roll groups, passed between rolls having a circumferential speed difference while being maintained at a temperature of 122°C, and stretched 5.6 times in the longitudinal direction. Subsequently, the film was led to a tenter, stretched 8.8 times in the width direction at a temperature of 160°C, then subjected to heat treatment at 128°C while being relaxed by 11% in the width direction as the relaxation treatment, and further subjected to heat treatment at 138°C while being held with a clip in the width direction as the second stage heat treatment. Then, the film was subjected to a cooling step at 100°C and led to the outside of the tenter, the clip at the end of the film was released, then a film surface (surface of the film on the side in contact with the casting drum) was subjected to corona discharge treatment in the atmosphere at a treatment intensity of 25 W·min/m$^2$ , and a film having a film thickness of 2.8 $\mu$m was wound up into a film roll. Characteristics of the polypropylene film of this example and capacitor characteristics are as shown in Table 6. The reliability of the film as a capacitor was at a very good level.

(Comparative Example 6)

As shown in Table 5, as a polypropylene resin, a propylene homopolymer having a meso-pentad fraction of 0.974 and a melt flow rate (MFR) of 5.0 g/10 min (Novatec (registered trademark) PP "SA4L" manufactured by Japan Polypropylene Corporation) (hereinafter referred to as "PP-1") was used. The polypropylene resin was extruded into a sheet from a T-die at 250°C using a 60 mm extruder, cooled and solidified using a cooling roll at 30°C, then stretched 4.5 times in the length direction (MD direction) at 135°C, and then held with a clip at both ends. The sheet was led to a hot-air oven and preheated at 170°C, stretched 8.2 times in the transverse direction (TD direction) at 160°C, and then heat-treated at 168°C while being relaxed at a relaxation ratio of 3.7%. After that, one surface, of the film was subjected to corona treatment, and a film having a film thickness of 4.0 $\mu$m was wound up into a film roll. Characteristics of the polypropylene film of this comparative example and capacitor characteristics are as shown in Table 6. The reliability evaluation as a capacitor was at a level with problems such as breakage of the device.

(Comparative Example 7)

Polypropylene resin chips shown in Table 5, which were manufactured by Prime Polymer Co., Ltd., had a meso-pentad fraction of 0.983, a melting point of 167°C, a Tmc of 111°C, and a melt flow rate (MFR) of 2.6 g/10 min, and were used in Example 10, were supplied to an extruder set at a temperature of 240°C, and melt-extruded into a sheet from a T-shaped slit die. The molten sheet was brought into close contact with a casting drum maintained at 90°C by electrostatic application, and cooled and solidified to give an unstretched polypropylene film. Subsequently, the unstretched polypropylene film was gradually preheated to 142°C by a plurality of roll groups, passed between rolls having a circumferential speed difference while being maintained at a temperature of 142°C, and stretched 5.1 times in the longitudinal direction. Subsequently, the film was led to a tenter, stretched 8.8 times in the width direction at a temperature of 160°C, then subjected to heat treatment at 130°C while being relaxed by 6% in the width direction as the relaxation treatment, and further subjected to heat treatment at 140°C while being held with a clip in the width direction as the second stage heat treatment. Then, the film was subjected to a cooling step at 100°C and led to the outside of the tenter, the clip at the end of the film was released, then a film surface (surface of the film on the side in contact with the casting drum) was subjected to corona discharge treatment in the atmosphere at a treatment intensity of 25 W·min/m$^2$ , and a film having a film thickness of 6.0 $\mu$m was wound up into a film roll. Characteristics of the polypropylene film of this comparative example and capacitor characteristics are as shown in Table 6. The reliability evaluation as a capacitor was at a level with problems such as deformation of the device shape.

(Comparative Example 8)

Polypropylene resin chips shown in Table 5, which were manufactured by Prime Polymer Co., Ltd., had a meso-pentad fraction of 0.960, a melting point of 161°C, a Tmc of 108°C, and a melt flow rate (MFR) of 3.0 g/10 min, and were polymerized using a Ziegler-Natta catalyst, were supplied to an extruder set at a temperature of 240°C, and melt-extruded into a sheet from a T-shaped slit die (lip temperature: 261°C) . The molten sheet was brought into close contact with a casting drum maintained at 20°C by electrostatic application, and cooled and solidified to give an unstretched polypropylene film. Subsequently, the unstretched polypropylene film was gradually preheated to 120°C by a plurality of roll groups, passed between rolls having a circumferential speed difference while being maintained at a temperature of 120°C, and stretched 5.2 times in the longitudinal direction. Subsequently, the film was led to a tenter, stretched 7.8 times in the width direction at a temperature of 160°C, then subjected to heat treatment at 130°C while being relaxed by 10% in the width direction as the first stage heat treatment and relaxation treatment, and further subjected to heat treatment at 140°C while being held with a clip in the width direction as the second stage heat treatment. Then, the film was subjected to a cooling step at 100°C and led to the outside of the tenter, the clip at the end of the film was released, then a film surface (surface of the film on the side in contact with the casting drum) was subjected to corona discharge treatment in the atmosphere at a treatment intensity of 25 W·min/m$^2$ , and a film having a film thickness of 6.0 $\mu$m was wound up into a film roll. Characteristics of the polypropylene film of this comparative example and capacitor characteristics are as shown in Table 6. The reliability evaluation as a capacitor was at a level with problems such as deformation of the device shape.

[Table 1]

| | | Example 1 | Example 2 | Example 3 | Example 4 | Example 5 | Example 6 | Example 7 |
|---|---|---|---|---|---|---|---|---|
| Casting drum temperature | - | 94 | 94 | 20 | 20 | 20 | 20 | 94 |
| Mesomorphic phase fraction of unstretched sheet | (%) | 0 | 0 | 36 | 81 | 80 | 80 | 0 |
| Longitudinal stretch ratio | times | 5.8 | 5.7 | 6.0 | 6.0 | 6.0 | 6.0 | 5.8 |
| Transverse stretch ratio | times | 10.5 | 9.8 | 11.0 | 10.5 | 11.0 | 11.0 | 10.5 |
| Area ratio | times | 61 | 56 | 66 | 63 | 66 | 66 | 61 |
| Transverse stretching temperature | (°C) | 158 | 159 | 157 | 158 | 158 | 158 | 158 |
| First stage heat treatment temperature | (°C) | 140 | 130 | 130 | 135 | 135 | 135 | 140 |

(continued)

| | | Example 1 | Example 2 | Example 3 | Example 4 | Example 5 | Example 6 | Example 7 |
|---|---|---|---|---|---|---|---|---|
| Second stage heat treatment temperature | (°C) | 155 | 140 | 140 | 145 | 145 | 145 | 155 |

[Table 2]

| | | Example 1 | Example 2 | Example 3 | Example 4 | Example 5 | Example 6 | Example 7 |
|---|---|---|---|---|---|---|---|---|
| Film thickness | ($\mu$m) | 2.3 | 2.2 | 2.0 | 2.2 | 2.3 | 2.3 | 2.3 |
| Crystal orientation degree of $\alpha$-(110) plane of polypropylene film | - | 0.792 | 0.808 | 0.821 | 0.816 | 0.819 | 0.820 | 0.790 |
| Sum of thermal shrinkage rates in longitudinal direction and width direction of film after being subjected to heat treatment at 120°C for 10 minutes | (%) | 3.6 | 3.3 | 2.9 | 3.4 | 3.3 | 3.2 | 3.6 |
| Relationship between stress at 5% elongation in film longitudinal direction and stress at 5% elongation in film width direction (TD-F5 value)/(MD-F5 value) | (-) | 0.48 | 0.41 | 0.52 | 0.51 | 0.52 | 0.51 | 0.48 |
| Relationship between breaking strength (St) and elongation at break (El) in film longitudinal direction (St) /(El) | (MPa/%) | 1.5 | 1.8 | 2.1 | 2.0 | 2.0 | 2.1 | 1.5 |
| F50 value in film longitudinal direction at 125°C | (MPa) | 14 | 16 | 18 | 17 | 18 | 18 | 14 |
| Volume resistivity at 110°C | (W$\Omega$cm) | $6.5 \times 10^{14}$ | $8.1 \times 10^{14}$ | $8.8 \times 10^{14}$ | $1.4 \times 10^{15}$ | $1.6 \times 10^{15}$ | $1.6 \times 10^{15}$ | $6.5 \times 10^{14}$ |
| Film surface Three-dimensional center plane average roughness Sra | (nm) | 71 | 72 | 11 | 31 | 42 | 44 | 73 |
| Film surface Ten-point average roughness SRz | (nm) | 471 | 465 | 132 | 305 | 285 | 291 | 481 |
| Coefficient of static friction ($\mu$s) | (-) | 0.9 | 0.9 | 1.3 | 0.8 | 0.8 | 0.9 | 1.1 |
| Nitrogen element composition amount at film surface | (atomic%) | <0.1 | <0.1 | <0.1 | <0.1 | <0.1 | 9.5 | 3.8 |
| Glossiness | (%) | 135 | 133 | 150 | 144 | 142 | 141 | 135 |
| Breakdown voltage 1 of film at 125°C | (V/$\mu$m) | 388 | 402 | 425 | 418 | 428 | 441 | 397 |
| Capacitor device workability | - | A | A | B | A | A | A | A |
| Capacitor characteristics at 110°C | Withstand voltage | B | A | A | A | A | S | A |
| | Reliability | B | B | B | A | A | A | B |

EP 3 296 348 B1

[Table 3]

| | | Example 8 | Example 9 | Comparative Example 1 | Comparative Example 2 | Comparative Example 3 | Comparative Example 4 | Comparative Example 5 |
|---|---|---|---|---|---|---|---|---|
| Casting drum temperature | - | 94 | 30 | 85 | 92 | 88 | 20 | 30 |
| Mesomorphic phase fraction of unstretched sheet | (%) | 0 | 51 | 0 | 0 | 0 | 36 | 50 |
| Longitudinal stretch ratio | times | 5.8 | 5.9 | 4.5 | 5.0 | 5.6 | 5.7 | 5.6 |
| Transverse stretch ratio | times | 10.5 | 11.0 | 10.0 | 10.5 | 10.5 | 10.0 | 12.2 |
| Area ratio | times | 61 | 65 | 45 | 53 | 59 | 57 | 68 |
| Transverse stretching temperature | (°C) | 158 | 161 | 162 | 165 | 163 | 158 | 164 |
| First stage heat treatment temperature | (°C) | 140 | 130 | 160 | - | 170 | - | 170 |
| Second stage heat treatment temperature | (°C) | 155 | 140 | 155 | - | 155 | - | 155 |

[Table 4]

| | (unit) | Example 8 | Example 9 | Comparative Example 1 | Comparative Example 2 | Comparative Example 3 | Comparative Example 4 | Comparative Example 5 |
|---|---|---|---|---|---|---|---|---|
| Film thickness | (μm) | 2.3 | 5.8 | 2.2 | 2.3 | 2.2 | 2.0 | 6.0 |
| Crystal orientation degree of a-(110) plane of polypropylene film | | 0.791 | 0.813 | 0.762 | 0.773 | 0.751 | 0.785 | 0.766 |
| Sum of thermal shrinkage rates in longitudinal direction and width direction of film after being subjected to heat treatment at 120°C for 10 minutes | (%) | 3.6 | 3.6 | 3.6 | 4.7 | 2.8 | 5.0 | 2.9 |
| Relationship between stress at 5% elongation in film longitudinal direction and stress at 5% elongation in film width direction (TD-F5 value)/(MD-F5 value) | (-) | 0.48 | 0.51 | 0.38 | 0.41 | 0.42 | 0.44 | 0.43 |
| Relationship between breaking strength (St) and elongation at break (El) in film longitudinal direction (St)/(El) | (MPa/%) | 1.5 | 2.0 | 1.1 | 1.3 | 1.1 | 1.2 | 1.3 |
| F50 value in film longitudinal direction at 125°C | (MPa) | 14 | 19 | 11 | 10 | 12 | 13 | 14 |
| Volume resistivity at 110°C | (WΩcm) | $3.6 \times 10^{14}$ | $1.1 \times 10^{15}$ | $7.4 \times 10^{13}$ | $5.1 \times 10^{14}$ | $5.1 \times 10^{14}$ | $3.2 \times 10^{14}$ | $5.4 \times 10^{14}$ |
| Film surface Three-dimensional center plane average roughness Sra | (nm) | 74 | 22 | 88 | 91 | 93 | 9 | 19 |
| Film surface Ten-point average roughness SRz | (nm) | 485 | 288 | 745 | 890 | 912 | 119 | 251 |
| Coefficient of static friction (μs) | (-) | 0.9 | 0.8 | 0.9 | 1.1 | 0.8 | 1.7 | 0.9 |
| Nitrogen element composition amount at film surface | (atomic%) | 9.4 | <0.1 | <0.1 | <0.1 | <0.1 | <0.1 | <0.1 |
| Glossiness | (%) | 135 | 147 | 124 | 121 | 127 | 151 | 149 |
| Breakdown voltage 1 of film at 125°C | (V/μm) | 395 | 433 | 365 | 340 | 375 | 403 | 396 |
| Capacitor device workability | - | A | A | A | A | A | C | A |

(continued)

| | | Example 8 | Example 9 | Comparative Example 1 | Comparative Example 2 | Comparative Example 3 | Comparative Example 4 | Comparative Example 5 |
|---|---|---|---|---|---|---|---|---|
| Capacitor characteristics at 110°C | Withstand voltage | A | A | D | C | C | C | c |
| | Reliability | A | B | C | D | C | D | C |

[Table 5]

| | | Example 10 | Example 11 | Example 12 | Example 13 | Comparative Example 6 | Comparative Example 7 | Comparative Example 8 |
|---|---|---|---|---|---|---|---|---|
| Meso-pentad fraction | - | 0.983 | 0.983 | 0.976 | 0.983 | 0.974 | 0.983 | 0.960 |
| Crystallization temperature Tmc | (°C) | 111 | 111 | 113 | 111 | - | 111 | 108 |
| Casting drum temperature | - | 20 | 25 | 20 | 18 | 30 | 90 | 20 |
| Mesomorphic phase fraction of unstretched sheet | (%) | 63 | 59 | 58 | 75 | 67 | 0 | 56 |
| Longitudinal stretch ratio | times | 5.8 | 5.0 | 5.6 | 5.6 | 4.5 | 5.1 | 5.2 |
| Longitudinal stretching temperature | (°C) | 120 | 118 | 120 | 122 | 135 | 142 | 120 |
| Transverse stretch ratio | times | 8.6 | 8.5 | 8.7 | 8.8 | 8.2 | 8.8 | 7.8 |
| First stage heat treatment temperature | (°C) | 130 | 130 | 133 | 128 | 168 | 130 | 130 |
| Second stage heat treatment temperature | (°C) | 140 | 140 | 145 | 138 | | 140 | 140 |

[Table 6]

|  |  | Example 10 | Example 11 | Example 12 | Example 13 | Comparative Example 6 | Comparative Example 7 | Comparative Example 8 |
|---|---|---|---|---|---|---|---|---|
| Film thickness | (μm) | 5.4 | 5.2 | 5.3 | 2.8 | 4.0 | 6.0 | 6.0 |
| Thickness unevenness in film longitudinal direction | (%) | 2.3 | 3.2 | 2.6 | 4.2 | 8.1 | 6.7 | 2.4 |
| Sum of maximum strengths in longitudinal direction and width direction of film | (MPa) | 602 | 584 | 548 | 612 | 420 | 480 | 380 |
| Thermal shrinkage rate in longitudinal direction after heat treatment at 125°C for 15 minutes | (%) | 1.3 | 1.1 | 1.5 | 1.2 | 3.9 | 1.2 | 1.2 |
| Thermal shrinkage rate in width direction after heat treatment at 125°C for 15 minutes | (%) | 0.5 | 0.5 | 0.6 | 0.2 | 3.2 | 2.2 | 0.4 |
| 125°C maximum strength in film longitudinal direction | (MPa) | 122 | 113 | 102 | 128 | 74 | 99 | 78 |
| Film total haze | (%) | 0.3 | 0.5 | 0.3 | 0.1 | 0.5 | 1.3 | 0.6 |
| Breakdown voltage 2 of film at 125°C | (V/μm) | 628 | 608 | 563 | 612 | 403 | 440 | 440 |
| Capacitor reliability at 110°C |  | A | A | B | A | D | c | c |

EP 3 296 348 B1

DESCRIPTION OF REFERENCE SIGNS

E: Power supply
A: Ammeter
X: Specimen
a: Main electrode
b: Counter electrode
c: Guard electrode

**Claims**

1. A polypropylene film having a crystal orientation degree of an $\alpha$-crystal (110) plane measured by wide-angle X-ray diffractometry of 0.78 or more, a sum of thermal shrinkage rates in a width direction and a longitudinal direction after being subjected to heat treatment at 120°C for 10 minutes of 4.0% or less, and a relationship between a stress at 5% elongation in the width direction (TD-F5 value) and a stress at 5% elongation in the longitudinal direction (MD-F5 value) of (MD-F5 value)/(TD-F5 value) > 0.45, wherein the crystal orientation degree of an $\alpha$-crystal (110) plane, the thermal shrinkage rates and the stress at 5% elongation are measured by the methods described in the specification.

2. The polypropylene film according to claim 1, having a film thickness, measured as described in the specification, in the range of 0.5 $\mu$m or more and less than 15 $\mu$m.

3. The polypropylene film according to claim 1 or 2, having a relationship between a maximum strength (St) and a maximum elongation (El) in the longitudinal direction, measured as described in the specification, of (St)/(El) $\geq$ 1.2.

4. The polypropylene film according to any one of claims 1 to 3, having a stress at 50% elongation in the longitudinal direction at 125°C (F50 value), measured as described in the specification, of 13 MPa or more.

5. The polypropylene film according to any one of claims 1 to 4, having a volume resistivity at 110°C, measured as described in the specification, of $5 \times 10^{14}$ $\Omega \cdot$cm or more.

6. The polypropylene film according to any one of claims 1 to 5, having a glossiness of at least one surface of 130% or more and less than 150%, and having, when being stacked, a coefficient of static friction ($\mu$s) of 0.1 or more and 1.5 or less, wherein the glossiness and the coefficient of static friction ($\mu$s) are measured as described in the specification.

7. The polypropylene film according to any one of claims 1 to 6, having a nitrogen element composition amount detected by X-ray photoelectron spectroscopy (XPS) as described in the specification of 1 atomic% or more in at least one surface.

8. The polypropylene film according to any one of claims 1 to 7, which is obtained by subjecting at least one surface to plasma treatment.

9. A metal membrane layered film comprising the polypropylene film according to any one of claims 1 to 8, and a metal membrane provided on at least one surface of the polypropylene film.

10. A film capacitor comprising the metal membrane layered film according to claim 9.

11. A method for manufacturing a polypropylene film, the method comprising a step of subjecting at least one surface of the polypropylene film according to any one of claims 1 to 7 to plasma treatment.

12. A method for manufacturing a metal membrane layered film, the method comprising a metal membrane providing step of providing a metal membrane to at least one surface of a polypropylene film obtained by the manufacturing method according to claim 11.

**13.** A method for manufacturing a film capacitor, the method comprising using a metal membrane layered film obtained by the manufacturing method according to claim 12.

**Patentansprüche**

**1.** Polypropylenfolie mit einem durch Weitwinkel-Röntgendiffraktometrie gemessenen Kristallorientierungsgrad der $\alpha$-Kristall- (110-) Fläche von 0,78 oder mehr, einer Summe von Wärmeschrumpfungsraten in Breitenrichtung und Längsrichtung, nachdem er einer 10-minütigen Wärmebehandlung bei 120 °C unterzogen wurde, von 4,0 % oder weniger, und einem Verhältnis zwischen der Spannung bei 5 % Dehnung in Breitenrichtung (TD-F5-Wert) und der Spannung bei 5 % Dehnung in Längsrichtung (MD-F5-Wert) von (MD-F5-Wert) / (TD-F5-Wert) > 0,45, wobei der Kristallorientierungsgrad der $\alpha$-Kristall- (110-) Fläche, die Wärmeschrumpfungsraten und die Spannung bei 5 % Dehnung nach den in der Beschreibung beschriebenen Verfahren gemessen werden.

**2.** Polypropylenfolie nach Anspruch 1, die eine wie in der Beschreibung beschrieben gemessene Foliendicke im Bereich von 0,5 $\mu$m oder mehr und weniger als 15 $\mu$m aufweist.

**3.** Polypropylenfolie nach Anspruch 1 oder 2, die ein wie in der Beschreibung beschrieben gemessenes Verhältnis zwischen der Höchstfestigkeit (St) und der Maximaldehnung (El) in Längsrichtung von (St) / (El) $\geq$ 1,2 aufweist.

**4.** Polypropylenfolie nach einem der Ansprüche 1 bis 3, die eine wie in der Beschreibung beschrieben gemessene Spannung bei 50 % Dehnung in Längsrichtung bei 125 °C (F50-Wert) von 13 MPa oder mehr aufweist.

**5.** Polypropylenfolie nach einem der Ansprüche 1 bis 4, die einen wie in der Beschreibung beschrieben gemessenen spezifischen Volumenwiderstand bei 110 °C von 5 x $10^{14}$ $\Omega \cdot$cm oder mehr aufweist.

**6.** Polypropylenfolie nach einem der Ansprüche 1 bis 5, die einen Glanz von zumindest einer Oberfläche von 130 % oder mehr und weniger als 150 % aufweist und die bei Stapelung einen statischen Reibungskoeffizienten ($\mu$s) von 0,1 oder mehr und 1,5 oder weniger aufweist, wobei der Glanz und der statische Reibungskoeffizient ($\mu$s) wie in der Beschreibung beschrieben gemessen werden.

**7.** Polypropylenfolie nach einem der Ansprüche 1 bis 6, die in zumindest einer Oberfläche eine wie in der Beschreibung beschrieben durch Röntgen-Photoelektronenspektroskopie (XPS) detektierte Menge an elementarem Stickstoff in der Zusammensetzung von 1 Atom-% oder mehr aufweist.

**8.** Polypropylenfolie nach einem der Ansprüche 1 bis 7, die erhältlich ist, indem zumindest eine Oberfläche einer Plasmabehandlung unterzogen wird.

**9.** Geschichtete Metallmembranfolie, die eine Polypropylenfolie nach einem der Ansprüche 1 bis 8 und eine Metallmembran umfasst, die auf zumindest einer Oberfläche der Polypropylenfolie bereitgestellt ist.

**10.** Folienkondensator, der eine geschichtete Metallmembranfolie nach Anspruch 9 umfasst.

**11.** Verfahren zur Herstellung einer Polypropylenfolie, wobei das Verfahren einen Schritt des Unterziehens von zumindest einer Oberfläche einer Polypropylenfolie nach einem der Ansprüche 1 bis 7 einer Plasmabehandlung umfasst.

**12.** Verfahren zur Herstellung einer geschichteten Metallmembranfolie, wobei das Verfahren einen Metallmembran-Bereitstellungsschritt des Bereitstellens einer Metallmembran auf zumindest einer Oberfläche einer durch ein Herstellungsverfahren nach Anspruch 11 erhaltenen Polypropylenfolie umfasst.

**13.** Verfahren zur Herstellung eines Folienkondensators, wobei das Verfahren die Verwendung einer durch ein Herstellungsverfahren nach Anspruch 12 erhaltenen geschichteten Metallmembranfolie umfasst.

**Revendications**

**1.** Film de polypropylène présentant un degré d'orientation cristalline d'un plan de cristal $\alpha$ (110) mesuré par diffractométrie de rayons X grand angle de 0,78 ou plus, une somme de taux de retrait thermique dans une direction de

**EP 3 296 348 B1**

largeur et une direction longitudinale après avoir été soumis à un traitement thermique à 120°C pendant 10 minutes de 4,0 % ou moins, et une relation entre une contrainte à 5 % d'allongement dans la direction de largeur (valeur TD-F5) et une contrainte à 5 % d'allongement dans la direction longitudinale (valeur MD-F5) de (valeur MD-F5)/(valeur TD-F5) > 0,45, dans lequel le degré d'orientation cristalline d'un plan de cristal $\alpha$ (110), les taux de retrait thermique et les contraintes à 5 % d'allongement sont mesurés par les procédés décrits dans la description.

2. Film de polypropylène selon la revendication 1, présentant une épaisseur de film, mesurée comme décrit dans la description, dans la plage de 0,5 $\mu$m ou plus et moins que 15 $\mu$m.

3. Film de polypropylène selon la revendication 1 ou 2, présentant une relation entre une résistance maximale (St) et un allongement maximal (El) dans la direction longitudinale, mesuré comme décrit dans la description, de (St)/(El) $\geq$ 1,2.

4. Film de polypropylène selon l'une quelconque des revendications 1 à 3, présentant une contrainte à 50 % d'allongement dans la direction longitudinale à 125°C (valeur F50), mesurée comme décrit dans la description, de 13 MPa ou plus.

5. Film de polypropylène selon l'une quelconque des revendications 1 à 4, présentant une résistivité volumique à 110 C, mesuré comme décrit dans la description, de 5 x $10^{14}$ Qcm ou plus.

6. Film de polypropylène selon l'une quelconque des revendications 1 à 5, présentant une brillance d'au moins une surface de 130 % ou plus et de moins de 150 %, et présentant, lorsqu'il est empilé, un coefficient de frottement statique (ps) de 0,1 ou plus et de 1,5 ou moins, dans lequel la brillance et le coefficient de frottement statique (ps) sont mesurés comme décrit dans la description.

7. Film de polypropylène selon l'une quelconque des revendications 1 à 6, présentant une quantité de composition d'élément d'azote détectée par spectroscopie photoélectronique aux rayons X (XPS) comme décrit dans la description de 1 % atomique ou plus dans au moins une surface.

8. Film de polypropylène selon l'une quelconque des revendications 1 à 7, qui est obtenu en soumettant au moins une surface à un traitement au plasma.

9. Film stratifié à membrane métallique comprenant le film de polypropylène selon l'une quelconque des revendications 1 à 8, et une membrane métallique prévue sur au moins une surface du film de polypropylène.

10. Condensateur à film comprenant le film stratifié à membrane métallique selon la revendication 9.

11. Procédé de fabrication d'un film de polypropylène, le procédé comprenant une étape consistant à soumettre au moins une surface du film de polypropylène selon l'une quelconque des revendications 1 à 7 à un traitement au plasma.

12. Procédé de fabrication d'un film stratifié à membrane métallique, le procédé comprenant une étape de fourniture de membrane métallique consistant à fournir une membrane métallique à au moins une surface d'un film de polypropylène obtenu par le procédé de fabrication selon la revendication 11.

13. Procédé de fabrication d'un condensateur à film, le procédé comprenant une utilisation d'un film stratifié à membrane métallique obtenu par le procédé selon la revendication 12.

[Fig 1]

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2129905 A
- JP 2014231584 A
- JP 11188790 A
- JP 2014051657 A
- JP 9262945 A
- WO 2015012324 A

**Non-patent literature cited in the description**

- **MOTONOBU KAWAI.** Film Capacitor Leap Forward, From Car to Energy. Nikkei Electronics, Nikkei Business Publications, Inc, 17 September 2012, 57-62